# EUROPÄISCHE PATENTANMELDUNG

(11) **EP 4 650 397 A1**
(43) Veröffentlichungstag der Anmeldung: **19.11.2025**
(21) Anmeldenummer: 24020149.1
(22) Anmeldetag: 14.05.2024
(51) Int. Cl.: C08L 33/24

(54) **HARZZUSAMMENSETZUNG FÜR EIN STRANLUNGSHÄRTENDES ADDITIVES FERTIGUNGSVERFAHREN**

(71) Anmelder: Cubicure GmbH, 1230 Wien (AT)
(72) Erfinder: Frank, Christian, 1230 Wien (AT); Gorsche, Christian, 7210 Mattersburg (AT); Kury, Markus, 1060 Wien (AT)
(74) Vertreter: SONN Patentanwälte GmbH & Co KG

(57) **Zusammenfassung**

Harzzusammensetzung für ein strahlungshärtendes additives Fertigungsverfahren, insbesondere für ein lithographisches Fertigungsverfahren, umfassend:
a) eine Komponente A bestehend aus mindestens einer ungesättigten Kohlenstoffverbindung, bevorzugt ausgewählt aus der Gruppe bestehend aus Vinylgruppen, (Meth)acrylaten, (Meth)acrylamiden, Fumaraten, Styrolderivaten, Zimtsäurederivaten, Vinylamine, Vinylether, Vinylcarbamate, Vinylester und Allyl-Verbindungen sowie Mischungen daraus,
b) eine Komponente B ausgewählt aus der Gruppe bestehend aus Maleimiden, Citraconimid, bevorzugt aromatisches difunktionelles Citraconimid, und Itaconimid sowie Mischungen daraus,
c) eine Komponente C bestehend aus mindestens einer, bevorzugt nicht halogenierten, flammhemmenden chemischen Verbindung, wobei bevorzugt die Komponente C einen Schmelzpunkt von ≤90 °C, weiter bevorzugt von ≤70 °C, besonders bevorzugt von ≤50 °C und insbesondere bevorzugt einen Schmelzpunkt unter Raumtemperatur aufweist.
d) eine Komponente D bestehend aus mindestens einem Photoinitiator
sowie gegebenenfalls Additive.

## Beschreibung

Die vorliegende Erfindung betrifft eine Harzzusammensetzung für ein strahlungshärtendes additives Fertigungsverfahren, insbesondere für ein lithographisches Fertigungsverfahren.

Üblicherweise werden in strahlungshärtenden additiven Fertigungsverfahren bei Prozesstemperatur flüssige oder zähflüssige Reaktivharze lokal und hoch aufgelöst einer Strahlung ausgesetzt und dadurch ausgehärtet. Die erste Schicht wird auf einer Bauplattform oder einem Substrat ausgehärtet, an welchem die in weiterer Folge schichtweise ausgehärteten dreidimensionalen Formkörper anhaften können. Der schichtweise Aufbau der Formkörper kann in einem bottomup oder top-down Prozess erfolgen. Beispiele für strahlungshärtende additive Fertigungsverfahren (AM) sind Stereolithographie, Digital Light Processing (DLP), Liquid Crystal Display (LCD), Zwei-Photonen-Lithographie, Inkjet, volumetrischer 3D Druck, Area-wise vat polymerization, Material Jetting, Area-wise film polymerization, Thermoset deposition, Continuous fiber thermoset deposition, vat vulcanization, verschiedene düsenbasierte Technologien sowie diverse Verfahrenskombinationen. Außerdem können die genannten Technologien und Verfahrenskombinationen auch mit zusätzlichen Technologien kombiniert werden, beispielsweise mit anderen generativen bzw. additiven Fertigungsverfahren, wie fused deposition modelling, subtraktiven Verfahren, Inkjet, Fiber Placement- und Fiber Coating-Verfahren, Bohr- und Lötverfahren, Dye Coating- und Bonding-Verfahren, Kalt- und Heißplasmabehandlungs-Verfahren, Wire-Bonding-Verfahren, Spray Coating- und Micro-Droplet-Verfahren, Gussverfahren, um beispielsweise Bauteile zu befüllen, Schneide- und FräsVerfahren, Pick-and-Place-Verfahren.

Ein weiteres Verfahren ist die von der Anmelderin entwickelte Hot Lithography Technologie (WO2021130661A1, WO2018032022A1). Hier werden bei Raumtemperatur viskose, hochviskose, feste und/oder hochgefüllte Harzzusammensetzungen nicht-selektiv oder selektiv aufgeheizt, wodurch die Viskosität soweit abgesenkt wird, dass die Harze in Schichtverfahren prozessierbar werden.

Nach dem 3D Druck können die erhaltenen Bauteile im sogenannten Postprocessing finalisiert werden. Typische Postprocessingschritte enthalten das Abschleudern von überschüssigen Harzresten (WO2023214319A1), das Reinigen mittels (organischen) Lösungsmitteln (WO2023095047A1), um an den Bauteilen anhaftende Harzreste zu entfernen, das Entfernen von optional vorhandenen Stützstrukturen (z.B. mittels Klingen oder Laser) und/oder das Nachhärten der Bauteile, beispielsweise durch Strahlung, thermisches Nachhärten oder durch die Wirkung von Mikrowellen).

Im letzten Jahrzehnt haben sich additive Fertigungsverfahren, umgangssprachlich auch 3D Druck genannt, als Produktionstechnologien etabliert, wobei zahlreiche industrielle Endanwendungen im Bereich des lichthärtenden 3D Drucks erschlossen wurden. Für einige dieser Anwendungen ist der Einsatz von flammgeschützten oder flammhemmenden Materialien notwendig. Diese finden Einsatz in der Elektronikindustrie, Steckverbinderindustrie, Bahnindustrie, Luft- und Raumfahrt, Medizintechnik, im Energiesektor und in vielen anderen Industrien.

In photoharzbasierten, also strahlungshärtenden AM-Verfahren (additive manufacturing)-Verfahren wird üblicherweise mit Harzen basierend auf (Meth)acrylaten gearbeitet. Die aus (Meth)acrylat-Harzen erhaltenen Polymere, auch Photopolymere genannt, sind üblicherweise nicht flammgeschützt und brennen nach einer gewissen Zeit in einer Flamme vollständig ab, das heißt, sie erlöschen nicht von selbst. Als standardisierter Test zur Ermittlung der Flammbeständigkeit von Kunststoffen gilt die UL94 Vertikalbrenn-Prüfung, wobei ein Prüfkörper mit einer bestimmten Dicke für eine bestimmte Zeit einer Flamme ausgesetzt wird, im Anschluss aus der Flamme entfernt wird und dann von selbst erlöschen muss, um die Brandprüfung zu bestehen. Werden noch zusätzliche Rahmenbedingungen erfüllt, kann die Brandprüfung des Kunststoffes mit V-0 bewertet werden. Eine V-0-Bewertung nach UL94 ist für viele Anwendungen eine Grundvoraussetzung für den Einsatz in bestimmten Endprodukten. Eine V-0 Klassifizierung ist bei den meisten Kunststoffen sehr stark dicken- bzw. wandstärkenabhängig, wobei eine V-0 Klassifizierung nach UL94 bei geringer werdender Probendicke üblicherweise schwerer zu erreichen ist. Unter niedrigen Prüfkörperdicken werden üblicherweise Dicken ≤3,00 mm, ≤2,00 mm, ≤1,50 mm, bevorzugt ≤1,00 mm, weiter bevorzugt ≤0,75 mm und besonders bevorzugt ≤0,50 mm verstanden.

Prinzipiell können Photopolymere auf Basis von (Meth)acrylatHarzen eine V-0 Einstufung nach UL94 erhalten. Mit Hilfe von klassischen nichthalogenierter Flammschutzkomponenten ist eine V-0 Klassifizierung bei Wandstärken von ≤3,00 mm oder gar von ≤2,00 mm kaum zu erreichen. Daher werden meist halogenierte, insbesondere bromierte Flammschutzmittel zugesetzt, um nach Möglichkeit eine V-0 Bewertung nach UL94 zu erreichen. Halogenierte Flammschutzmittel stehen mittlerweile allerdings unter strenger Beobachtung der Regulierungsbehörden, da bei Bränden persistente polybromierte oder polychlorierte Dibenzodioxine und Dibenzofurane (Dioxine) entstehen können und da halogenierte Flammschutzmittel allgemein nicht als umweltfreundlich gelten.

Mit klassischen (Meth)acrylat-basierten Photopolymeren in Kombination mit nicht halogenierten Flammschutzmitteln ist es jedoch nur schwer möglich, flammgeschützte Materialien mit niedrigen Wandstärken zu erhalten, was den Einsatz in beispielsweise kleinen, dünnwandigen Bauteilen beschränkt. Zwar kann man den Flammschutz in der Formulierung erhöhen, womit die Wandstärke des flammgeschützten Materials abnehmen kann, jedoch leiden darunter zumeist die mechanischen Eigenschaften. Oft kommt es dabei zu einem Verlust beim Zugmodul, bei der Zugfestigkeit, Zugdehnung und/oder bei der Wärmeformbeständigkeit, was den Einsatz solcher Materialien aus (thermo)mechanischer Sicht stark einschränkt. Des Weiteren weisen die so erhaltenen flammgeschützten Photopolymere oft eine schlechte Langzeitbeständigkeit hinsichtlich UV-Bewitterung, thermische Exposition und/oder feuchte Wärme auf. Daher können viele Anwendungen vor allem im Bereich von 3D gedruckten, flammgeschützten (Klein)teilen für den Einsatz in vielen Endprodukten im Stand der Technik noch nicht ermöglicht werden.

Der vorliegenden Erfindung liegt der die Aufgabe zugrunde, eine Harzzusammensetzung anzugeben, die die genannten Nachteile des Standes der Technik überwindet und die insbesondere zu strahlungsgehärteten Polymeren bzw. Photopolymeren führt, die optimale Flammschutzeigenschaften und eine möglichst gute Umweltverträglichkeit und Arbeitssicherheit aufweisen.

Zur Lösung dieser Aufgabe umfasst eine Harzzusammensetzung der eingangs genannten Art erfindungsgemäß:
a) eine Komponente A bestehend aus mindestens einer ungesättigten Kohlenstoffverbindung, bevorzugt ausgewählt aus der Gruppe bestehend aus Vinylgruppen, (Meth)acrylaten, (Meth)acrylamiden, Fumaraten, Styrolderivaten, Zimtsäurederivaten, Vinylamine, Vinylether, Vinylcarbamate, Vinylester und Allyl-Verbindungen sowie Mischungen daraus,
b) eine Komponente B ausgewählt aus der Gruppe bestehend aus Maleimiden, Citraconimiden, bevorzugt aromatisches difunktionelles Citraconimid, und Itaconimiden sowie Mischungen daraus,
c) eine Komponente C bestehend aus mindestens einer, bevorzugt nicht halogenierten, flammhemmenden chemischen Verbindung, wobei bevorzugt die Komponente C einen Schmelzpunkt von ≤90 °C, weiter bevorzugt von ≤70 °C, besonders bevorzugt von ≤50 °C und insbesondere bevorzugt einen Schmelzpunkt unter Raumtemperatur aufweist,
d) eine Komponente D bestehend aus mindestens einem Photoinitiator
sowie optional zumindest ein Additiv.

Bevorzugt besteht die Harzzusammensetzung aus den genannten Komponenten.

Das zumindest eine Additive kann in beliebigen Mengen von 0,0001 bis 90 Gew.-% bezogen auf die Gesamtformulierung zugesetzt sein.

In den folgenden Absätzen sind Beispiele für Komponenten A bis D angegeben, die zum besseren Verständnis der Erfindung dienen sollen und nicht als Einschränkung zu sehen sind.

Bevorzugt ist die Komponente A ausgewählt aus der Gruppe bestehend aus härtbaren mono- und/oder multifunktionellen Monomer-, Oligomer-, Prepolymer- und/oder Polymere-Harzkomponenten mit reaktiven Endgruppen und/oder Seitgruppen, insbesondere:
- (Meth)acrylaten wie z.B. Methyl(meth)acrylat, Ethyl(meth)acrylat, n-Propyl(meth)acrylat, n-Butyl(meth)acrylat, Isobutyl(meth)acrylat, n-Hexyl(meth)acrylat, 2-Ethylhexyl(meth)acrylat, n-Octyl(meth)acrylat, n-Decyl(meth)acrylat, n-Dodecyl(meth)acrylat, 2-Hydroxyethyl(meth)acrylat, 2-Hydroxybutyl(meth)acrylat, 2- or 3-Hydroxypropyl(meth)acrylat, 2-Methoxyethyl(meth)acrylat, 2-Ethoxyethyl(meth)acrylat, 2- or 3-Ethoxypropyl(meth)acrylat, Tetrahydrofurfuryl(meth)acrylat, Isobornyl(meth)acrylat, 2-(2-ethoxyethoxy)ethyl(meth)acrylat, Cyclohexyl(meth)acrylate, 2-Phenoxyethyl(meth)acrylat, Glycidyl(meth)acrylat, Isodecyl(meth)acrylat, 2-Phenoxyethyl(meth)acrylat, Lauryl(meth)acrylat, Phenyl(meth)acrylat, Benzyl(meth)acrylat, (Meth)acryloyloxybenzoate, Dihydrodicyclopentadienyl (meth)acrylat, Salicylat(meth)acrylat, substituierte Phenyl(meth)acrylate, 2-dimethylaminoethyl(meth)acrylat, multifunktionelle (Meth)acrylate, insbesondere 1,4-Butandioldi(meth)acrylat, 1,6-Hexandi(meth)acrylat, 1,10-Decandioldi(meth)acrylat oder 1,12-Dodecandioldi-(meth)acrylat, 2-(2-Biphenyloxy)-ethyl(meth)acrylat, Bisphenol-A-di(meth)acrylat (ein Additionsprodukt aus (Meth)acrylsäure und Bisphenol-A-diglycidylether) Ethoxy- oder propoxyliertes Bisphenol-A-di(meth)acrylat (z.B. 2-[4-(2-(Meth)acryloyloxyethoxyethoxy) phenyl]-2-[4-(2-(Meth)acryloyloxyethoxy)phenyl]-propan) oder 2,2-bis[4-(2-(Meth)acryloxypropoxy)phenyl]propan, 1,6-Bis-[2-(meth)-acryloyloxyethoxycarbonylamino]-2,2,4-trimethylhexan (ein Additionsprodukt aus 2-Hydroxyethyl(meth)acrylat und 2,2,4-(2,4,4)-Trimethylhexamethylen-diisocyanat), mit Vinyl oder (Meth)acrylat-Endgruppen-modifizierten Oligomeren oder polymere Polyphenylenether (Sabic, z.B. Noryl SA 9000) oder Polyimide, Pentaerythrittetra(meth)acrylat, Di-, Tri- oder Tetraethylenglykol-di(meth)acrylat, Trimethylolpropantri(meth)acrylat, Vinyl- oder (Meth)acrylat-Endgruppen und/oder Seitgruppenmodifizierten Silikonen, Polybutadiendi(meth)acrylate, aliphatische Urethandi(meth)acrylaten (z. B. Ebecryl 8811, X-851-1066, Ebecryl 8809, Ebecryl 8408, Ebecryl 246, Miramer PU2100, Miramer SC2404, Miramer SC2565, Miramer PU2564, BR-571 MB, BR-541 MB, BR-7423GB, CN9001, CN965, CN981, CN8881 NS), Polyether-Urethan(meth)acrylaten (z.B. Br-541 MB, BR582H15), hydrophoben Urethan(meth)acrylaten (z. B. BRC-443), Polyester-Urethan(meth)acrylaten (z. z. B. BR744 BT), Polyester-Di(meth)acrylaten (z. B. CN2608A, CN704, CN790), modifizierte Epoxy-Di(meth)acrylaten (z. B. CN2003EU), oligomere Polycarbonat-Di(meth)acrylaten und besonders bevorzugt ethoxylierte Bisphenol-A-di(meth)acrylate (z.B. Miramer 220, Miramer 2301), Miramer PU4100NT, Tricyclodecandimethanol-di(meth)acrylat (SR833S, SR834), Tricyclodecanemethanol-(meth)acrylat (z.B. SR789), Tris[2-(acryloyloxy)ethyl]isocyanurat, Tris[2-(methacryloyloxy)ethyl] isocyanurat, Bis[2-(methacryloyloxy)ethyl] isocyanurat, Bis[2-(acryloyloxy)ethyl] isocyanurat, dentritische (Meth)acrylat Oligomere (z.B. Bomar BDT-4330, Bomar XDT-1018, Bomar BDT-1015, BDT-1006, Miramer SP1106, AOHUI HP6310, AOHUI HP6610), Melaminacrylat (z.B. Miramer SC9610), Raylok 1722, Tetrahydrodicyclopentadienyl (meth)acrylat, Isobornylcyclohexyl(meth)acrylat.
- (Meth)acrylamiden, wie z.B. N,N-Di(methyl)acrylamid, N-Isopropylacrylamid, Butylacrylamid, N,N'-Methylenbis(acrylamid), N-Hydroxyethylacrylamid, 3-dimethylaminopropylacrylamid, N,N-Diethylacrylamid, N,N-diphenyl acrylamid und besonders bevorzugt Acrylamiden wie insbesondere 4-Acryloylmorpholin (ACMO), 1,3,5-Triacryloylhexahydro-1,3,5-triazin,
- Allylverbindungen wie bevorzugt Allylphenol, Triallylamine, 2,2'-Bis[4-allyloxyphenyl]propan, 1,1,1-Tris(hydroxymethyl)-propandiallylether, Diallylisophthalat, Diallylphthalat, Diallylterephthalat, Cyclohexandicarboxylsäure-diallylester, Diallyldiglycolcarbonat, Diallylpolycarbonat, Diallyl-2,2'-oxydiethyldicarbonat und Oligomere, Triallyltrimellitat, besonders bevorzugt 1,3,5-Triallyl-1,3,5-triazin-2,4,6(1H,3H,5H)-trion, o,o'-Diallylbisphenol-A, 2,4,6-Tris(allyloxy)-1,3,5-triazin, 4,4'-bis(o-propenylphenoxy)-benzophenone, 2,2'-bis(3-allyl-4-hydroxyphenyl)-propane, Diallyl Isocyanurate.

Selbstverständlich können auch Mischungen der aufgezählten Beispiele für Komponente A vorliegen.

Erfindungsgemäß ist die Komponente B ausgewählt aus der Gruppe bestehend aus Maleimiden, Citraconimiden, bevorzugt aromatisches difunktionelles Citraconimid, und Itaconimiden sowie Mischungen daraus.

Als Beispiele für Komponente B sind außerdem monomere, oligomere und/oder polymere Verbindungen gemäß Formel 1 zu nennen (Maleimide).

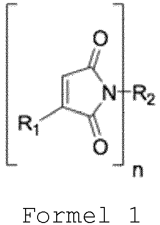

Die Komponente B gemäß Formel 1 umfasst vorzugsweise zumindest eine Spezies gemäß der Formel 1, wobei R₁ entweder H, CH₃ oder CH₂ repräsentiert, mit n gleich 1 bis 1000, in der R₂ unabhängig voneinander einen linearen, verzweigten oder zyklischen aliphatischen oder aromatischen C5-C40-Rest repräsentiert aus einer oder mehreren Verbindungen der Gruppe bestehend aus Phenyl, Benzyl, Phenethyl, Methyl, Ethyl, Propyl, Butyl, Pentyl, Hexyl, Octyl, Decanyl, Do-Decanyl, Essig-, Propano-, Butano-, Pentano-, Undecano-, Dodecano-, Benzoesäure und den entsprechenden Estern, Alkyl- oder aromatischen Estern, Cyclopropyl, Cyclobutyl, Cyclopentyl, Cyclohexyl, Cycloheptyl, Cyclooctyl, Adamantyl, Isobornyl, Propenyl, Biphenyl, Naphthyl, Anthracenyl, Pyrenyl, (Methylen)oxy, (Ethylen)oxy, die gegebenenfalls mit einem oder mehreren C1-C6-Alkyl, C1-C6-Alkoxy, C1-C₆-Thioether, Halogen, -NO₂ , -SO₃H, -CF₃, -OH, -NH₂, -SH, -CN, -Isocyanato, -Trimethoxysilyl oder -Triethoxysilyl substituiert sind.

Besonders bevorzugte Spezies der Komponente B sind insbesondere folgende: 2,6-Xylylmaleimid, N,N'-m-Phenylenbismaleimid, N,N'-(4-Methyl-m-phenylen)-bismaleimid, 4,4'-Diphenylmethanbismaleimid, 1,3-Bis(citraconimidomethyl)benzol, 1,3-Bis((3-methyl-2,5-dioxopyrrol-1-yl)methyl)benzol, 1,6-Bismaleimido-(trimethyl)hexan (Isomerengemisch aus 2,2,4- und 2,4,4-Trimethyl), 4,4'-Bismaleimidodiphenylmethan, 2,4-Bismaleimidotoluol, m-Xylylenbismaleimid, 1,6-Bismaleimidohexan, N,N-(1,3-phenylen)bismaleimid, 1,1-(Methylendi-4,4-phenylen)bismaleimid, Methylendianilinbismaleimid, N,N'-(4-Methyl-1,3-phenylen)dimaleimid, N,N'-Hexamethylenbismaleimid und/oder deren Oligomere und/oder Präpolymere, sowie Mischungen der genannten Beispiele.

In besonders bevorzugter Weise besteht die Komponente B aus einer eutektischen Mischung aus Maleimiden, bevorzugt Bismaleimiden, deren Schmelzpunkt ≤120 °C, bevorzugter ≤100 °C, weiter bevorzugt ≤90 °C und besonders bevorzugt ≤80 °C ist oder die sich gut in der Gesamtformulierung der erfindungsgemäßen Harzzusammensetzung lösen lassen. Unter einer eutektischen Mischung versteht man bevorzugte Mischungen aus Komponenten B, wobei der Schmelzpunkt der bevorzugten Mischung niedriger ist als die Schmelzpunkte der einzelnen Hauptbestandteile. Ein Beispiel für eine eutektische Mischung ist eine Mischung aus 4,4'-Diphenylmethanbismaleimid, m-Xylylenbismaleimid and 1,6-Bismaleimido-(trimethyl)hexan (isomerische Mischung aus 2,2,4- und 2,4,4-trimethyl) Dies erleichtert bzw. ermöglicht die Anmischung der photoreaktiven Formulierung bei niedrigeren Temperaturen von ≤110 °C, bevorzugt von ≤90 °C, weiter bevorzugt bei etwa 70 °C, erleichtert die Verarbeitbarkeit im additiven Prozess und unterbindet Kristallisation der Maleimid-, Citraconimid- und/oder Itaconimid-Komponenten aus der erfindungsgemäßen photoreaktiven Harzzusammensetzung.

In einigen bevorzugten Ausführungen der Erfindung besteht die Komponenten B ausschließlich aus einem oder mehreren Citraconimiden, besonders bevorzugt aus aromatischen difunktionellem Citraconimid Monomeren, Oligomeren oder Polymeren, sowie Mischungen daraus.

Bevorzugte Spezies der Komponente B sind im Folgenden anhand ihrer Strukturformeln angegeben.

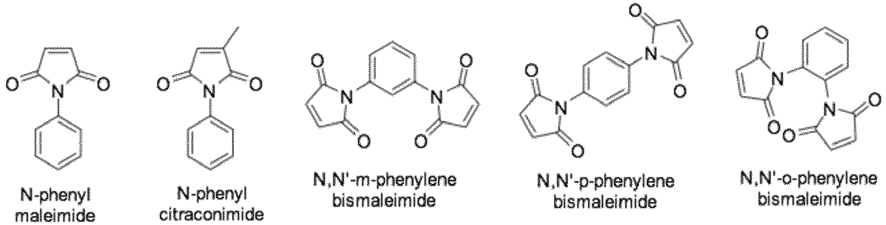

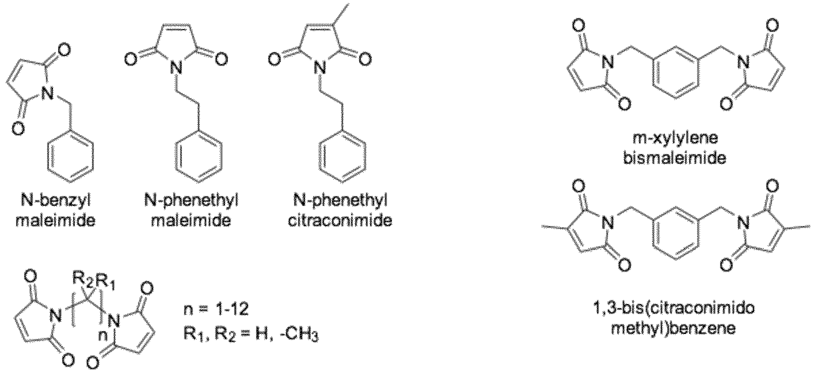

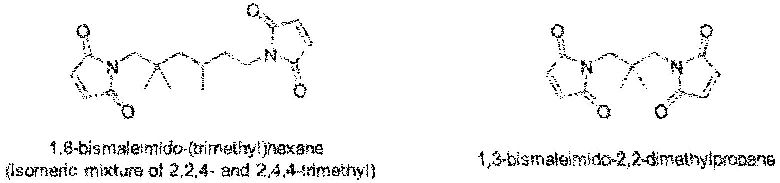

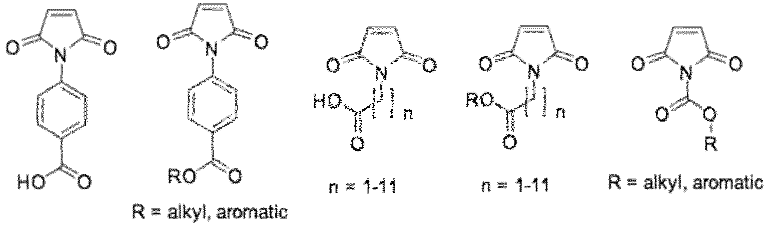

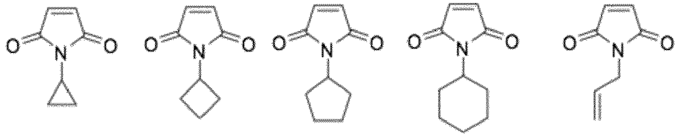

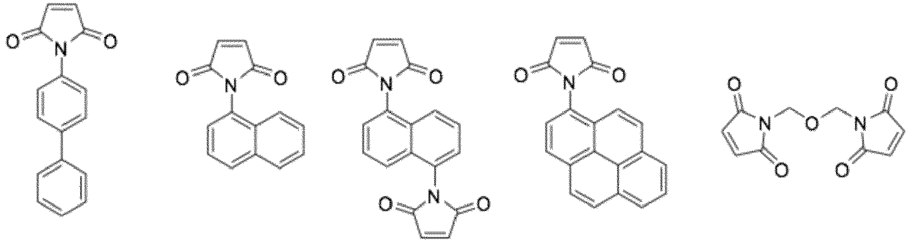

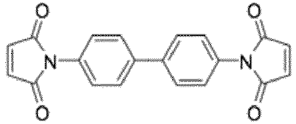

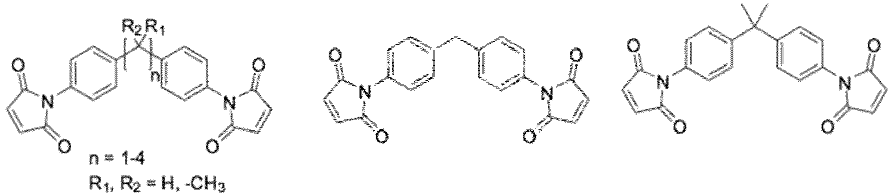

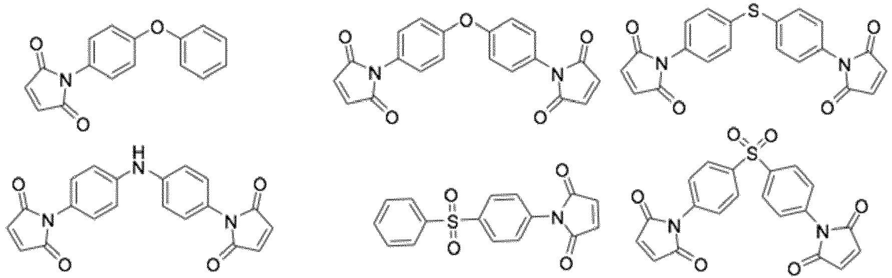

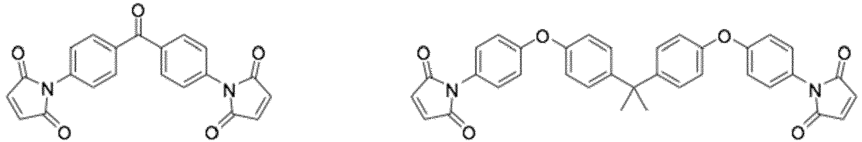

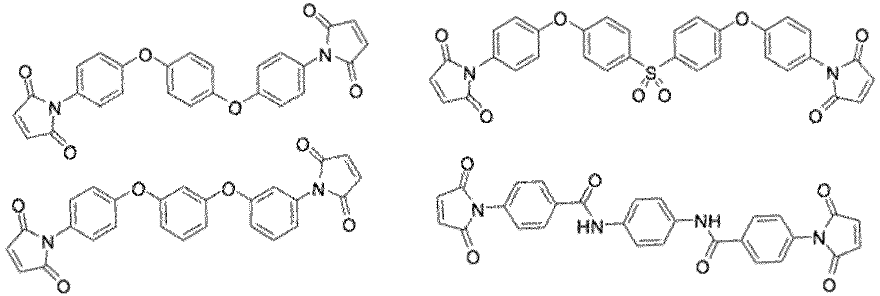

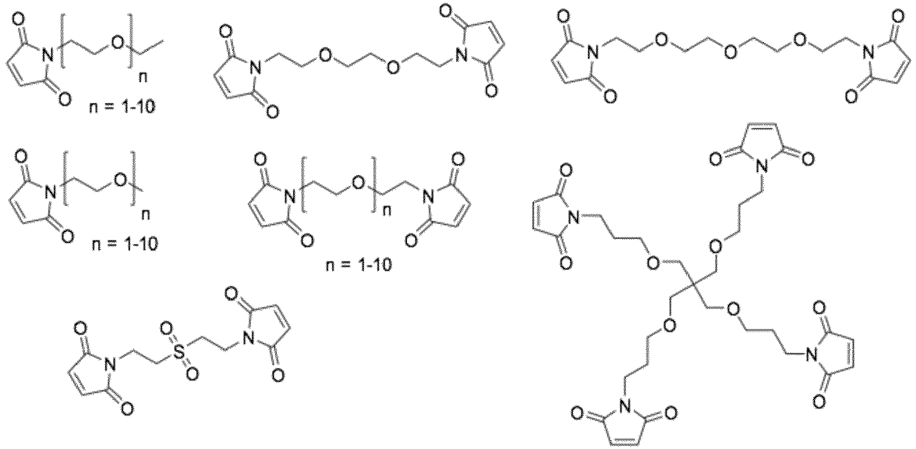

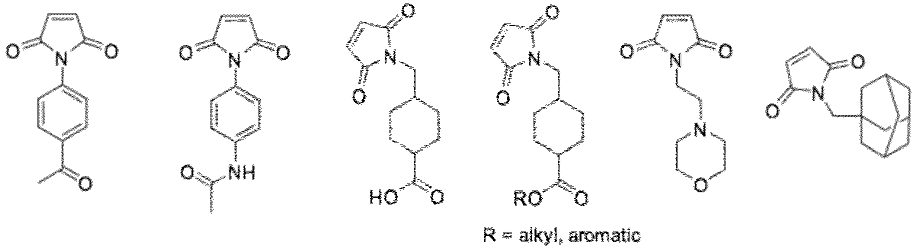

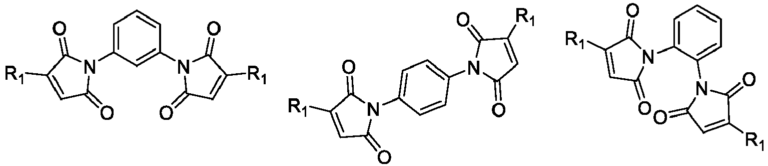

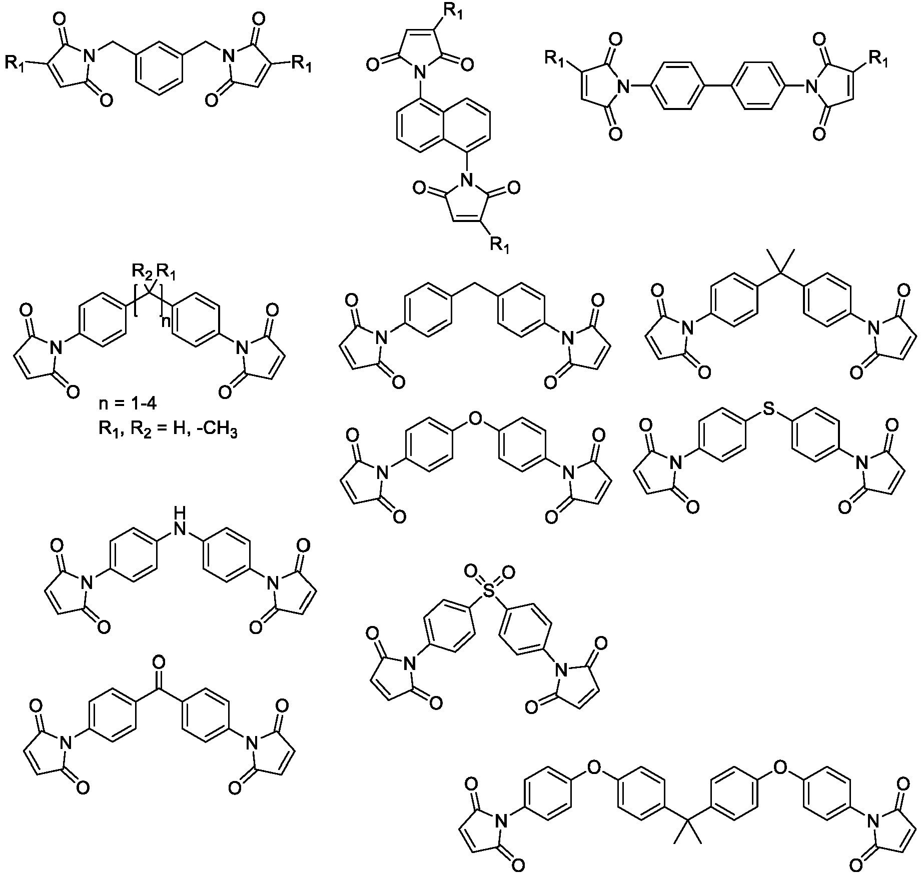

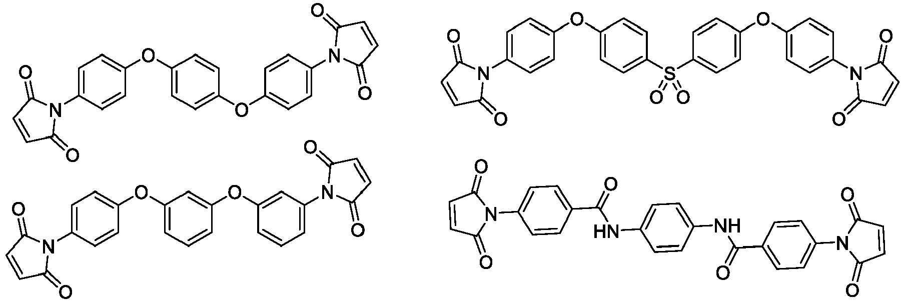

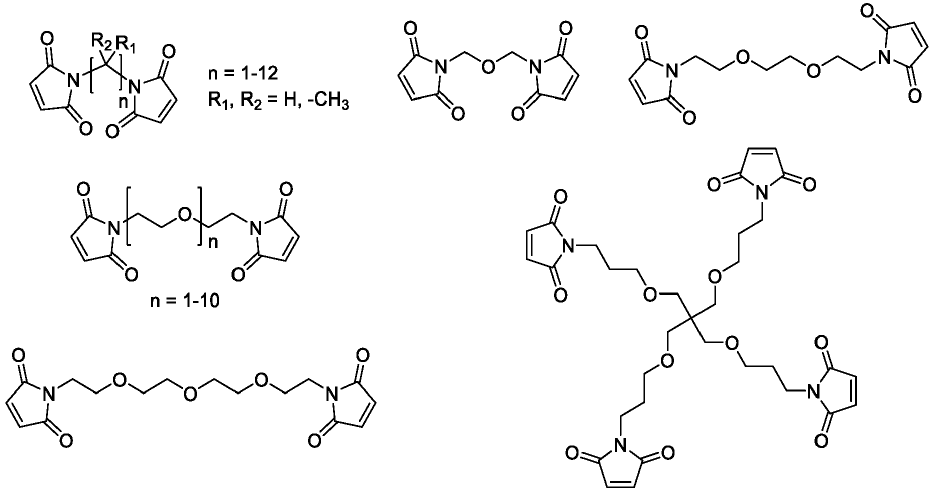

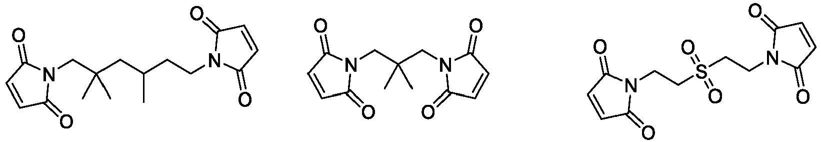

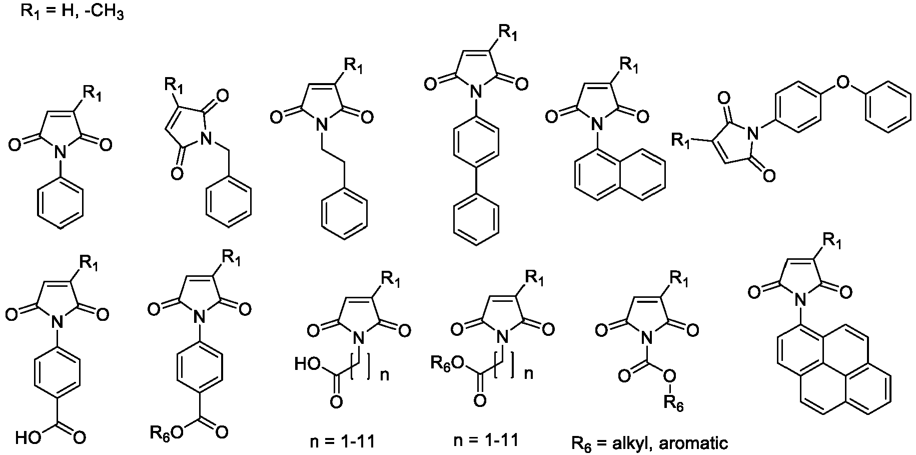

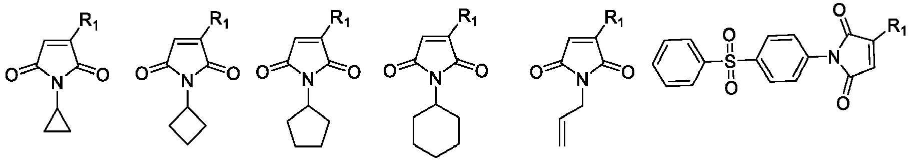

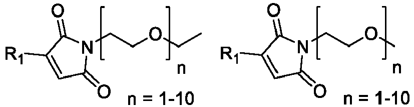

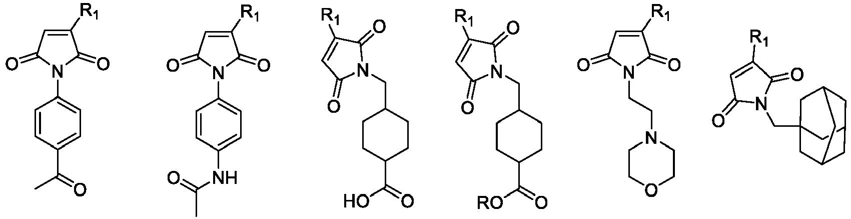

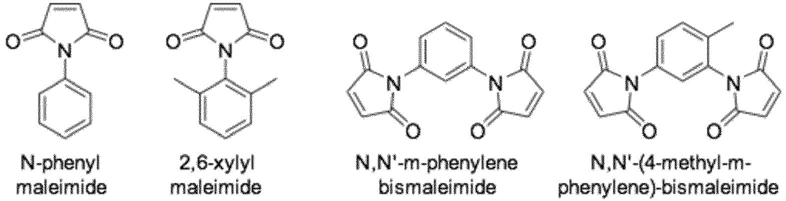

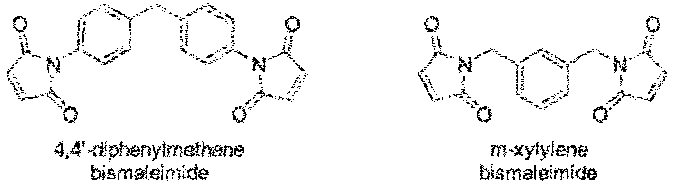

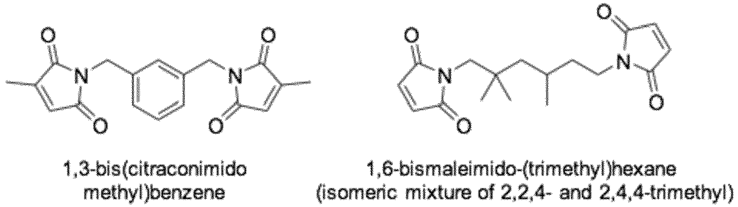

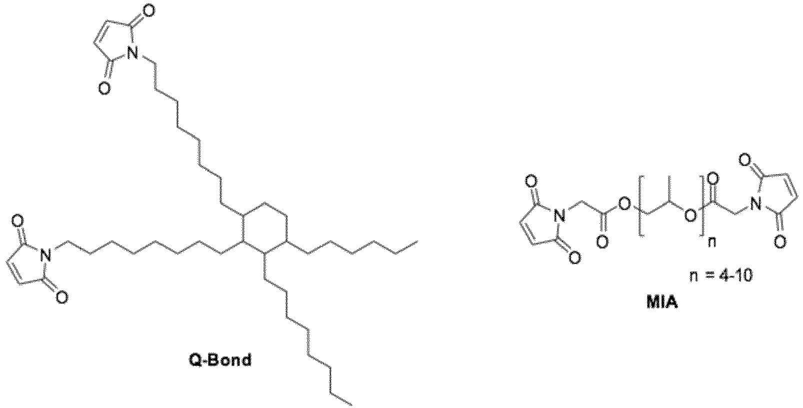

Die Komponente C besteht erfindungsgemäß aus mindestens einer, bevorzugt nicht halogenierten, flammhemmenden chemischen Verbindung (Flammschutzmittel), wobei bevorzugt die Komponente C einen Schmelzpunkt von ≤90 °C, weiter bevorzugt von ≤70 °C, besonders bevorzugt von ≤50 °C und insbesondere bevorzugt einen Schmelzpunkt unter Raumtemperatur aufweist.

Beispiele für die Komponente C sind halogenierte flammhemmende chemische Verbindungen, wie halogenierte Phosphate, halogenierte Diphenylether, halogeniertes Styrol, halogenierte Epoxide, halogenierte Bisphenol-A Derivate, halogenierte (Meth)acrylate, Trischloroisopropylphosphat und/oder halogenierte Paraffine. In einer anderen Ausführungsform sind solche halogenierten, flammhemmenden Komponenten mit einer polymerisierbaren Gruppe wie beispielsweise Vinylgruppen, Allylgruppen, Epoxiden, Acrylamiden, und/oder (Meth)acrylat funktionalisiert. Unter halogenierten Flammschutzmitteln versteht man Komponenten, die mindestens ein Fluor, Chlor und/oder Bromatom enthalten.

Bevorzugte Beispiele für die Komponente C sind nicht halogenierte flammhemmende chemische Verbindungen wie Aluminiumhydroxid, Aluminium-Oxid-Hydroxid, Magnesiumhydroxid, Dipentaeritrol, Pentaeritrol, Blähgraphit, organische Zusätze wie Stickstoffdonatoren und/oder phosphorhaltige Stoffe wie zum Beispiel Melamin, Melem, Melon, Melamincyanurate, organische Phosphate, Triphenylphosphin, Phosphinate, Melaminpolyphosphat, Melaminpolyzinkphosphat, 9,10-dihydro-9-oxa-10-phosphaphentantren-10-oxid (DOPO), diverse DOPO-Derivate, beispielsweise 1,4-Bis(6-oxido-6H-dibenz[c,e][1,2]oxaphosphorin-6-yl)piperazin, N,N'-Bis(6-oxido-6H-dibenz[c,e][1,2]oxaphosphiorin-6-yl)-1,2-ethandiamin, o-Allyl-DOPO, polymerisierbare DOPO-Derivate, 6-(2-allylphenoxy) dibenzo[c,e][1,2]oxaphosphinin-6-oxid, 6-(3-(allyloxy)-2-hydroxypropyl) dibenzo[c,e][1,2]oxaphosphinin-6-oxid, Dimethylpropanphosphonat, N,N-Dihydroxyethylaminomethan- phosphonsäurediethylester, Triphenylphosphat, Trioctylphosphat, Triethylphosphat, Tris-(2-ethylhexyl)phosphat, Trikresylphopshat, Diphenyloctylphosphat, Diphenyl(2-ethylhexyl)phosphat, Diphenylkresylphosphat, aromatische Polyphosphate, Bisphenol-A-basierte Polyphosphate, polymerisierbare Phosphorverbindungen, ((Meth)acryloyloxymethyl)diphenylphosphinoxid, 3-Glycidyloxydiphenylphosphinoxid, 3-Glycidyloxypropyldiphenylphosphinoxid, (1-Methylethylidene)di-4,1-phenylenetetraphenyldiphosphat und dessen Oligomere, Reaktionsmasse von 3-Methylphenyldiphenylphosphat, 4-Methylphenyldiphenylphosphat, Bis(3-methylphenyl)phenylphosphat, 3-Methylphenyl-4-methylphenylphenylphosphat, Triphenylphosphat, Bis(6-oxido-6H-dibenz[c,e][1,2]oxaphosphiorin-6-yl)-1,2-ethandiamin, Bisphenol-A bis(diphenylphosphat), Raylok 1722 von Allnex und/oder Struktol XP3795 von Schill+Seilacher. Wie aus der Aufzählung ersichtlich, sind phosphorbasierte Flammschutzmittel als Komponente C bevorzugt.

Besonders bevorzugt als Komponente C sind flüssige flammhemmende chemische Verbindungen oder Flammschutzmittel mit einem Schmelzpunkt ≤90 °C, bevorzugter ≤70 °C, weiter bevorzugt ≤50 °C. Besonders bevorzugt sind weiters flammhemmende chemische Verbindungen mit polymerisierbaren Gruppen. Besonders bevorzugt sind auch oligomere oder polymere flammhemmende chemische Verbindungen, die nicht aus der erfindungsgemäßen Harzzusammensetzung herausmigrieren können.

Für die Endanwendung sind auch insbesondere Flammschutzmittel bzw. flammhemmende chemische Verbindungen mit hoher Hydrolysebeständigkeit bzw. hoher thermischer Stabilität zu bevorzugen. Beispiele für besonders bevorzugte flammhemmende chemische Verbindungen sind in diesem Zusammenhang polymerisierbare DOPO-Derivate beispielsweise o-Allyl-DOPO, 6-(2-allylphenoxy)dibenzo[c,e][1,2]oxaphosphinin-6-oxid oder 6-(3-(allyloxy)-2-hydroxypropyl)dibenzo[c,e][1,2]oxaphosphinin-6-oxid, Bisphenol-A bis(diphenylphosphat), (1-Methylethylidene)di-4,1-phenylenetetraphenyldiphosphat und dessen Oligomere, Polymer aus Phosphortrichlorid mit 1,3-Benzendiolphenylester, Polymer aus Phosphorsäure und gemischten Estern aus [1,1'-Biphenyl]-4,4'-diol und Phenol, Ammoniumpolyphosphat (kann auch mit Melamin- oder Silikon-oberflächenmodifiziert sein), anorganische Phosphinatsalze oder eine Kombination aus einem alkylsubstituierten Aluminiumphosphinat wie Aluminiumdialkylphosphinate (z. B., Aluminium-Methylethylphosphinat, Aluminium-Diethylphosphinat, Aluminium-Methylbutylphosphinat, Aluminium-Methylcyclohexylphosphinat und/oder Aluminium-Diethylphosphinat) und/oder einem amidhaltigen Phosphinatsalz wie Aluminium-β-(N-Phenylcarbamid)ethylmethylphosphinat, Aluminium-β-(N-cyclohexylcarbamid)ethylmethylphosphinat und/oder Aluminium-β-(N-butylcarbamid)ethylmethylphosphinat.

Besonders bevorzugt ist es auch, dass Komponente C mindestens eine Verbindung gemäß der nachfolgenden Formel umfasst: 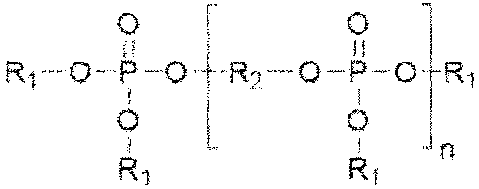 wobei R1 aus Methyl, Ethyl, linearem, verzweigtem oder cyclischem C3-C20 Alkyl, sowie unsubstituiertem oder substituiertem Phenyl, Benzyl, Cyclopentyl oder Cyclohexyl, R2 aus unsubstituiertem oder substituiertem, linearem, verzweigtem oder cyclischem C1-C20 Alkyl, bevorzugt Phenylen, Phenyldimethylen, Biphenyl, Bisphenol-A, Bisphenol-F, Bisphenol-S, Cyclohexyl, Cyclohexyldimethylen, Bicyclohexyl gewählt ist und n eine Zahl von 0 bis 20, bevorzugt von 1 bis 10 darstellt.

Demgemäß sind auch Substanzen als Komponente C bevorzugt, die ausgewählt sind aus der Gruppe bestehend aus Oligomeren oder Polymeren bestehend aus Spezies gemäß der nachfolgenden Formel: 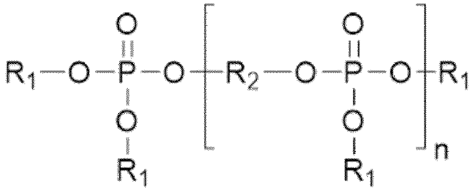 wobei R₁ aus Methyl, Ethyl, linear, verzweigten oder cyclischen C3-C20 Alkyl, sowie bevorzugt unsubstituierten oder substituierten Phenyl, Benzyl, Cyclopentyl oder Cyclohexyl, R₂ aus unsubstituiertem oder substituiertem, linearem, verzweigtem oder cyclischem C1-C20 Alkyl, bevorzugt Phenylen, Phenyldimethylen, Biphenyl, Bisphenol-A, Bisphenol-F, Bisphenol-S, Cyclohexyl, Cyclohexyldimethylen, Bicyclohexyl gewählt ist und n eine Zahl von 0 bis 20, bevorzugt von 1 bis 10 darstellt.

Beispiele für Substituenten sind Methyl, Ethyl, Alkyl, Methoxy, Chlor, Brom, oder Fluor.

Selbstverständlich sind auch Mischungen der genannten Komponenten möglich.

Die Komponente D besteht aus mindestens einem Photoinitiator, der durch Bestrahlung mit bestimmten Wellenlängen, vorzugsweise von 150 nm bis 1000 nm, bevorzugt zwischen 200 nm und 550 nm, besonders bevorzugt zwischen 350 nm und 450 nm, aktive Spezies formt, welche eine Polymerisation der erfindungsgemäßen Harzzusammenstellung auslösen können. Typische Mechanismen sind dabei radikalische, ionische (kationisch oder anionisch), oder Insertionspolymerisation.

Bevorzugte Photoinitiatoren der Komponente D sind Norrish-Photoinitiatoren vom Typ I, die allein oder in Kombination miteinander aus der Gruppe bestehend aus a-Hydroxyketonen, Phenylglyoxylaten, Benzyldimethylketalen, a-Aminoketonen, Mono- oder Bisacylphosphinen, -Phosphinoxiden, Mono-, Bis- oder Tetraacylsilanen, -Germanen, -Stannanen und Metallocenen ausgewählt sind.

Einige bevorzugte Beispiele der Photoinitiatoren der Komponente D sind 2-Hydroxy-2-methylpropiophenon, 1-Hydroxycyclohexylphenylketon, Methylphenylglyoxylate, 2-Benzyl-2-(dimethylamino)-4'-morpholinobutyrophenon, [1-(4-Phenylsulfanylbenzoyl) heptylidenamino]benzoat, [1-[9-Ethyl-6-(2-methylbenzoyl)carbazol-3- yljethylidenamino]acetat, 2,4,6-Trimethylbenzoyldiphenylphosphinoxid (TPO), Ethyl-(2,4,6-trimethylbenzoyl)phenylphosphinat (TPO-L), Phenylbis(2,4,6-trimethylbenzoyl)phosphinoxid (BAPO), Ethyl-(3-Benzoyl-2,4,6-trimethylbenzoyl) (phenyl)phosphinat, Bis(4-methoxybenzoyl)diethylgerman (BMDG) und Bis(cyclopentadienyl)bis[2,6-dlfluor-3-(1 - pyrryl)phenyl]titan und/oder polymere Typ-I-Fotoinitiatoren wie Ominpol TP.

Andere bevorzugte Photoinitiatoren der Komponente D sind Norrish Typ II Photoinitiatoren. Einige bevorzugte Beispiele sind Benzophenone (z.B.: Benzophenon, 4-Methylbenzophenon, 4,4'-Bis(diethylamino)benzophenon), Benzoin, Diketone (z. B. 9,10-Phenanthrenchinon, 1-Phenylpropan-1 ,2-dion, Diacetyl oder 4,4'-Dichlorbenzil und/oder Derivate davon) und Thioxanthone (z B.: Chlorpropoxythioxanthone, Isopropylxanthone oder 2,4-Diethyl-9H-thioxanthen-9-on). Solche Typ-II-Photoinitiatoren können vorzugsweise in Kombination mit Coinitiatoren wie tertiären Aminen (z. B. aromatische tertiäre Amine wie N,N-Dialkylanilin, p-Toluidin oder 3,5-Xylidin, p-N,N-Dialkylamino-phenylethanol, Benzoesäurederivate, Benzaldehyd oder Triethanolamin) verwendet werden.

Bevorzugt kann auch eine Kombination von Norrish Typ I und Typ II verwendet werden. Es können aber im Rahmen der vorliegenden Erfindung auch beliebige Kombinationen aus radikalischen, ionischen und/oder Insertionspolymerisationsinitatoren eingesetzt werden.

Zusätzlich zu den genannten Komponenten A bis D der Harzzusammensetzung können noch weitere Additive bzw. Zusätze der Formulierung hinzugesetzt werden.

Diese Additive bzw. Zusätze können andere polymerisierbare Komponenten, Oligomere und/oder Polymere sein. Beispiele für polymerisierbare Additive bzw. Zusätze sind ungesättigte Kohlenstoffverbindungen, Alkane, Alkine, (Meth)acrylate, (Meth)acrylamide, Fumarate, Styrolderivate, Zimtsäurederivate, Vinylamine, Vinylether, Vinylcarbamate, Vinylester, Allyl-Verbindungen, Vinyl-Verbindungen, Cyanacrylate, Epoxide, Oxetane, Cyanatester, cyclisch ringöffnend-polymerisierbare Verbindungen, und/oder cyclopolymerisierbare Verbindungen.

Gemäß einer bevorzugten Ausführungsform der vorliegenden Erfindung kann die Harzzusammensetzung auch mit Polymerisationsinitiatoren, Polymerisationsinhibitoren, Lösungsmitteln, Füllstoffen, Antioxidantien, Pigmenten, Farbstoffen, Oberflächenmodifikatoren, Flammschutzmitteln und Mischungen davon gemischt sein und somit als Additiv bzw. Zusatz enthalten. Die Polymerisationsinhibitoren sind vorzugsweise Chinone wie Hydrochinone und Benzochinone, Phenothiazine, Diethylhydroylamin, 4-tert-Butylcathecol, butyliertes Hydroxytoluol, Pyrogallol, TEMPO, bevorzugt in Mengen von 0,001 Gew.-% bis 3 Gew.-%, weiter bevorzugt 0,005 Gew.-% bis 0,5 Gew.-% und insbesondere bevorzugt 0,01 Gew.-% bis 1 Gew.-%.

In einigen bevorzugten Ausführungsformen der vorliegenden Erfindung enthält die Harzzusammensetzung zusätzliche organische und/oder anorganische Füllstoffe. Solche Mischungen werden im Allgemeinen als Komposite bezeichnet. Bevorzugte organische Füllstoffe sind Core-Shell-PolymerPartikel, Block-Copolymere, PTFE, Hochleistungspolymere, Thermoplaste, insbesondere Polyimide, Polyamide, Polycarbonate, Polystyrol, Polyoxymethylen, Flüssigkristallpolymer, Polybenzimidazole, Polyetherimide, Polybutylenterephthalat, Polyethylenterephthalat, Polyethersulfone, Polyphenylenether (Poly(oxy-2,6-dimethyl-1,4-phenylen)), Polyphenylensulfid oder Polysulfone, Kautschuke und dergleichen.

Diese können auch mit polymerisierbaren Gruppen modifiziert sein. Bevorzugt lassen sie sich in die Formulierung besonders gut einmischen, wenn sie Molekulargewichte (Mn) von ≤10000 g/mol, bevorzugt von ≤5000 g/mol und weiter bevorzugt von ≤2500 g/mol aufweisen (Mn entspricht dem Zahlenmittel der Molmasse und kann mittels Gel-Permeations-Chromatographie nach ISO 16014 bestimmt werden). Bevorzugte anorganische Füllstoffe können Metalle, Metalloxide und/oder Keramiken (z. B. SiO2, ZrO2, TiO2, ZnO oder Mischungen davon mit einer durchschnittlichen Teilchengröße von 0,5 µm - 100 um), Glasfasern und/oder Glaskugeln und/oder Wollastonit, bevorzugt in Mengen von 0,1 Gew.-% bis 40 Gew.-% bezogen auf das gesamte Gewicht der Harzzusammensetzung, Silikate wie Talk, Tone, Kieselsäure und/oder Glimmer, Glaspulver (insbesondere Quarz, Glaskeramik als bevorzugte Nano- oder Mikrofüllstoffe mit einer durchschnittlichen Teilchengröße von 0,05-100 um), Ruß, Graphen, Graphit und/oder elektrisch leitfähige Additive, bevorzugt Carbon Nanotubes, bevorzugt in Mengen von 0,001 Gew.-% bis 10 Gew.-% bezogen auf das gesamte Gewicht der Harzzusammensetzung sein.

Die mittlere Teilchengröße der Füllstoffe kann mittels statischer Lichtstreumethoden unter Anwendung der Mie-Theorie nach DIN/ISO 13320 zur Bestimmung der mittleren Teilchengröße und Teilchengrößenverteilung bestimmt werden.

Gemäß einer bevorzugten Ausführungsform der vorliegenden Erfindung können solche organischen oder anorganischen Füllstoffe Kugeln, Plättchen und/oder Fasern sein, die beispielsweise zu einer Erhöhung der Zugfestigkeit und/oder des Zugmoduls führen können (z.B. Wollastonit, Nanofasern, Whisker und/oder Mischungen davon, Kugeln, Brüche und/oder definierte dreidimensionale, insbesondere Graphit- und/oder zweidimensionale Strukturen, insbesondere Monolagen aus Graphen).

Vorzugsweise können die Füllstoffe an ihrer Oberfläche modifiziert werden (z. B. Silanisierung über radikalisch polymerisierbare Silane wie 3-Methacryloyloxypropyltrimethoxysilan). Für die Oberflächenmodifizierung von anorganischen Füllstoffen wie ZrO₂ oder TiO₂ können funktionalisierte, saure Phosphate (z. B. 10-Methacryloyloxydecyldihydrogenphosphat) verwendet werden. Mit solchen Modifikationen werden Phänomene wie Agglomeration, Mischungsstabilität, Partikelbindung an die Polymermatrix kontrolliert und/oder beeinflusst.

Die erfindungsgemäße Harzzusammensetzung kann zusätzlich allein oder in Kombination miteinander die folgenden Komponenten als Additive bzw. Zusätze enthalten: Stabilisatoren (z. B. UV-Stabilisatoren oder Alterungsschutzmittel), Antioxidantien, Farbstoffe (z. B. Farbstoffe oder Pigmente), Entschäumer, thermische Initiatoren, Katalysatoren, antibakterielle Mittel, antistatische Mittel, Weichmacher oder Gleitmittel, Netzmittel, Mattierungsmittel, Haftvermittler, Rheologiemodifikatoren, Thixotropiermittel, Dispergiermittel, optische Aufheller, Trübungsmittel, Antischaummittel, zusätzliche synergistisch wirkende flammhemmende Mittel, cyclopolymerisierbare Monomere und/oder UV-Absorber.

In manchen Ausführungen der vorliegenden Erfindung kann die Hinzugabe von thermischen Initiatoren oder Katalysatoren als Additive, die in einem dem 3D Druck nachgelagerten Prozess aktiviert werden können, vorteilhaft sein. Beispiele für thermische Initiatoren als Additive sind Peroxide, Hydroperoxide, Percarbonate, Peroxyacetate, Azoverbindungen, wie beispielsweise Azobis(isobutyronitril), 1,1'-Azobis(cyclohexan-1-carbonitril), 2,2'-Azobis(2,4,4-trimethylpentan), 2,2'-Azobis(N-butyl-2-methylpropionamid), 2,3-Dimethyl-2,3-diphenylbutan, tert-Butylhydroperoxid, Cumolhydroperoxid, p-Methanhydroperoxid, Di-isopropylbenzenmono hydroperoxid, Di-tert-butylperoxid, Dicumylperoxid, 2,5-Dimethyl-2,5-di(tert-butylperoxy)hexan-3, 2,5-Dimethyl-2,5-di-(tert-butylperoxy)-hexan, Di-(2-tert-butyl-peroxyisopropyl)-benzen, tert-Butylcumylperoxid, tert-Butylperoxybenzoat, Cumenhydroperoxid, Di-tert-Amylperoxid, tert-Butyl-peroxybenzoat, tert-Butyl-peroxyacetat, tert-Butylperoxy-2-ethylhexylcarbonat, tert-Butylperoxyisopropylcarbonat, 2,2-Di-(tert-butylperoxy)butan, tert-Butylperoxy-3,5,5-trimethylhexanoat, tert-Amylperoxy-2-ethylhexylcarbonat, 1,1-Di-(tert-butylperoxy)-cyclohexan, 1,1-Di-(tert-butylperoxy)-3,3,5-trimethylcyclohexan, tert-Butylperoxy-2-ethylhexanoat, Dibenzoylperoxid, Bis(4-tert-butylcyclohexyl) peroxydicarbonat, 3,6,9-triethyl-3,6,9-trimethyl-1,4,7-triperoxonan, tert-Amylperoxy-2-ethylhexanoat, tert-Butylperoxy-2-ethylhexylcarbonat, tert-Butylperoxy-2-ethylhexanoat, tert-Butylhydroperoxid sowie Mischungen daraus.

Außerdem können als Additive bzw. Zusätze sogenannte Netzwerkmodifizierer oder Netzwerkregler, wie zum Beispiel Transferreagenzien wie z.B. Thiole, Addition-Fragmentation Chain Transfer (AFCT)-Reagenzien, RAFT-Reagenzien (reversible-addition-fragmentation chain-transfer), NMP-Reagenzien (Nitroxide-mediated radical polymerization) hinzugegeben werden. Beispiele für Thiole sind Pentaerythritol-tetrakis(3-mercaptopropionat), Trimethylolpropan-tris(3-mercaptopropionat), oder Tris[2-(3-mercaptopropionyloxy)ethyl] Isocyanurat.

In einigen bevorzugten Ausführungsformen enthält die Harzzusammensetzung gemäß der vorliegenden Erfindung außerdem Additive bzw. Zusätze, die eine bessere Flammbeständigkeit, geringere Rauchtoxizität oder Rauchbildung bewirken. Solche flammhemmenden oder rauchunterdrückenden Additive werden aus den in der Polymerindustrie bekannten Stoffgruppen ausgewählt. Solche flammhemmenden oder rauchunterdrückenden Zusätze sind beispielsweise anorganische Füllstoffe oder mineralische Flammschutzmittel wie Aluminiumhydroxid, Magnesiumhydroxid, Calciumhydroxid, Antimonoxid, Zinnoxid, Borax und/oder Zinkborat, roter Phosphor, expandierter Graphit, organische Zusätze wie Stickstoffdonatoren und/oder phosphorhaltige Stoffe, halogenierte organische Flammschutzmittel wie halogenierte Phosphate, halogenierte Diphenylether, halogeniertes Styrol, halogenierte Epoxide, halogenierte (Meth)acrylate, Trischloroisopropilphosphonat und/oder halogenierte Paraffine, vorzugsweise in Mengen von 0,1 Gew.-% bis 50 Gew.-%, vorzugsweise in Mengen von 1 Gew.-% bis 30 Gew.-%, weiter bevorzugt in Mengen von 2 Gew.-% bis 25 Gew.-%, bezogen auf das Gesamtgewicht der Komponenten A-D sowie gegebenenfalls vorhandener Additive bzw. Zusätze.

In einer anderen bevorzugten Ausführungsform sind solche organischen, flammhemmenden Additive mit einer polymerisierbaren Gruppe wie Vinylgruppen, Allylgruppen, Epoxiden, Acrylamiden, und/oder (Meth)acrylat funktionalisiert.

In einigen bevorzugten Ausführungsformen enthält die erfindungsgemäße Harzzusammensetzung zusätzliche Zähigkeitsmodifikatoren als Additive bzw. Zusätze ausgewählt aus der Gruppe bestehend aus thermoplastischen und duromerischen Harzen. Solche Harze können beispielsweise Polypropylen, Polyethylen, Polyamid, Polyethylenoxid und/oder Polypropylenoxid, reaktive Kautschuke, Polybutadiene insbesondere Butadien-Acrylnitril-Copolymere und/oder natürliche Polymere wie Cellulose und/oder Gelatine sein, wobei solche Komponenten vorzugsweise mit einer oder mehreren reaktiven, radikalisch oder ionisch polymerisierbaren Gruppen terminiert oder funktionalisiert sind (z.B. (Meth)acrylat, (Meth)acrylamid, Vinylester, Vinylether- oder Styrolverbindungen, cyclische Ether wie Epoxyverbindungen oder Oxetane), und/oder Monomere, die diese reaktiven Gruppen mit flexiblen Linkern, insbesondere langen aliphatischen Ketten und/oder Ethylenglykolspacern, besonders bevorzugt Core-Shell-Polymer Partikeln und/oder TPU-Partikeln (thermoplastisches Polyurethan), enthalten, bevorzugt in Mengen von 0,5 Gew.-% bis 30 Gew.-%, weiter bevorzugt in Mengen von 2 Gew.-% bis 15 Gew.-% und besonders bevorzugt in Mengen von 5 Gew.-% bis 10 Gew.-% bezogen auf das gesamte Gewicht der Harzzusammensetzung.

In einer weiteren Ausführungsform der vorliegenden Erfindung können Silikone als Additive bzw. Zusätze der Harzzusammensetzung hinzugesetzt werden. In manchen bevorzugten Ausführungen sind diese Silikone endgruppen- und/oder seitgruppenmodifiziert, wobei typische chemische Gruppen zur Modifizierung aus der Gruppe ausgewählt sind, bestehend aus Vinylgruppen, Allylgruppen, (Meth)acrylaten, Silanolen, Siloxanen, Alkoxygruppen, Alkoxiden, Hydriden, Aminen, Epoxiden, Oxetanen, Mercapto-Gruppen, Carbinolen, Maleimiden und Acetoxy-Gruppen.

Die Verarbeitung der erfindungsgemäßen, photoreaktiven Harze ist bevorzugt, aber nicht ausschließlich mit Vat Polymerization Prozessen vorgesehen. Ebenfalls bevorzugt kann die Verarbeitung mit den eingangs erwähnten Hot Lithography Methoden erfolgen. Weiters können die photoreaktiven Harze auch in lithographischen Anlagen zu Herstellung von Leiterplatten (Printed circuit boards) eingesetzt werden.

In Hot Lithography Prozessen wird die strahlungshärtende Strukturierung der erfindungsgemäßen photoreaktiven Harzzusammensetzungen bei Prozesstemperaturen zwischen 35 und 200 °C, bevorzugt 35 und 120 °C, weiter bevorzugt 40 und 100 °C und besonders bevorzugt 40 und 90 °C durchgeführt.

In einer bevorzugten Ausführung der Erfindung wird die erfindungsgemäße Harzformulierung mit Hilfe eines Beschichtungsklinge auf einem transparenten Trägermedium (bevorzugt Wanne oder Folie) aufgetragen und im Anschluss von einer Strahlungsquelle ausgehärtet. Dabei besitzt die erfindungsgemäße Harzformulierung bei Prozesstemperatur eine Viskosität zwischen 0,01 bis 100 Pa.s, bevorzugt 0,1 bis 50 Pa.s, weiter bevorzugt 0,5 bis 20 Pa.s, wobei die auf dem Trägermedium aufgetragene Harzschicht eine Dicke von ≤2 mm, bevorzugt ≤1 mm, weiter bevorzugt ≤0,5 mm aufweisen kann. Die Formulierung kann aber auch in einer klassischen Wanne, im Harzbad oder mit speziellen Coatingmechanismen verarbeitet werden.

Nach dem 3D-Druck sind die Bauteile üblicherweise noch mit Harzresten überzogen, welche im Postprocessing entfernt werden müssen. Außerdem ist die chemische Reaktion nach der 3D Strukturierung im Polymerteil üblicherweise noch nicht vollständig abgeschlossen (oft spricht man von einem Grünling oder Grünkörper) und muss in einem oder mehreren Nachhärteprozessen vollendet werden.

Ein hoher Grünmodul und eine hohe Grünfestigkeit, die mittels Zugversuchs ermittelt werden können (z.B. ISO 527), sind vor allem im Postprocessing von Vorteil, da nachgelagerte Prozessschritte, wie das Waschen der Bauteile, das Zentrifugieren und das Nachhärten bei zu niedriger Grünfestigkeit oder Grünzugmodulen leicht zu Verzug, Bauteilverformung und/oder Rissen führen können. Diese Effekte treten vor allem bei Bauteilen mit niedrigen Wandstärken auf. Daher ist es zu bevorzugen, wenn der Zugmodul des Grünkörpers >1 GPa, bevorzugt >1,5 GPa, weiter bevorzugt >2 GPa beträgt. Bei der Zugfestigkeit des Grünkörpers sind Werte von >20 MPa, bevorzugt >25 MPa, weiter bevorzugt >30 MPa anzustreben.

Für die Reinigung können optional beheizte Zentrifugenprozesse verwendet werden, in denen das auf den Bauteilen anhaftende überschüssige Restharz abgeschleudert wird. Dieses kann gesammelt werden und idealerweise nach einer Qualitätskontrolle erneut dem Druckprozess zugeführt werden. Ein weiterer Reinigungsschritt kann das Reinigen mit Lösungsmitteln beinhalten, wobei die Bauteile mit wässrigen oder organischen Lösungsmitteln gewaschen werden, um Restharz zu entfernen. Im Anschluss können die gereinigten Grünkörper nachgehärtet werden. Dabei können sie mit Licht, bevorzugt UV-Licht (z.B. Quecksilberdampflampe, LEDs), beleuchtet werden. Typische Belichtungszeiten dauern zwischen 1 min bis 4 Stunden.

Eine weitere Möglichkeit bietet die thermische Nachhärtung im Ofen, wobei Temperaturen zwischen 50 und 300 °C geführt und unterschiedliche Temperaturprogramme gefahren werden können.

Nach erfolgtem Postprocessing, üblicherweise ein oder mehrere Reinigungsschritte gefolgt von einem oder mehrerer Nachhärteschritte, besitzen die aus der erfindungsgemäßen Formulierung erhaltenen finalen Photopolymere folgende vorteilhafte Eigenschaften:
In manchen Ausführungen der vorgestellten erfindungsgemäßen Formulierung führt die Verarbeitung mit einem additiven Fertigungsverfahren zu Photopolymeren, die die UL94 Prüfung mit V-0 Bewertung bestehen bei Dicken bzw. Wandstärken von ≤3,00 mm, ≤2,00 mm, ≤1,50 mm, bevorzugt ≤1,00 mm, weiter bevorzugt ≤0,75 mm und besonders bevorzugt ≤0,50 mm.

In weiteren Ausführungen der erfindungsgemäßen Harzzusammensetzung führt die Verarbeitung mit einem additiven Fertigungsverfahren zu Photopolymeren, die einen Sauerstoffindex (LOI) nach ISO 4589-2 >27%, >30%, bevorzugter >32%, besonders bevorzugt >34% aufweisen.

In weiteren Ausführungen der erfindungsgemäßen Harzzusammensetzung führt die Verarbeitung mit einem additiven Fertigungsverfahren zu Photopolymeren, die einen GWIT (Glow-Wire-Ignition-Temperature) nach DIN EN IEC 60695-2 ≥600 °C, bevorzugter ≥700 °C, weiter bevorzugt ≥800 °C und/oder einen GWFI(Glow-Wire-Flammability-Index) nach DIN EN IEC 60695-2 ≥600 °C, bevorzugter ≥700 °C, weiter bevorzugt ≥800 °C aufweisen.

weiteren Ausführungen der erfindungsgemäßen Harzzusammensetzung weisen die erfindungsgemäßen Photopolymere exzellente elektrische Isolationseigenschaften, beispielsweise eine hohe elektrische Durchschlagsfestigkeit, hohen Oberflächenwiderstand, einen hohen Volumenwiderstand und oder einem hohen Comparative Tracking Index (CTI) auf.

In weiteren Ausführungen der erfindungsgemäßen Harzzusammensetzung liegen die Durchschlagsfestigkeiten (gemäß IEC 60243-1) dabei bei ≥20 kV/mm, bevorzugt ≥25 kV/mm, oder weiter bevorzugt bei ≥30 kV/mm.

In weiteren Ausführungen der erfindungsgemäßen Harzzusammensetzung liegen die Oberflächenwiderstände (gemäß IEC 62631-3-2) bei ≥10¹² Ω, bevorzugt ≥10¹⁴ Ω, oder weiter bevorzugt bei ≥10¹⁶ Ω.

In weiteren Ausführungen der erfindungsgemäßen Harzzusammensetzung liegen die Volumenwiderstände (gemäß IEC 62631-3-1) bei ≥10¹² Ω cm, bevorzugt ≥10¹⁴ Ω cm, oder weiter bevorzugt bei ≥10¹⁶ Ω cm.

In weiteren Ausführungen der erfindungsgemäßen Harzzusammensetzung liegen die CTI-Werte (gemäß IEC 60112) bei ≥200 V, bevorzugt ≥400 V, oder weiter bevorzugt bei ≥600 V.

Ein weiterer Vorteil der vorliegenden Erfindung liegt in den niedrigen Dielektrizitätskonstanten und dielektrischen Verlustfaktoren für die mit der erfindungsgemäßen Harzzusammensetzung hergestellten Polymere bzw. Photopolymere. In bevorzugten Ausführungen der Erfindung liegt die Dielektrizitätskonstante (gemäß IEC 60250) bei 1 MHz oder 50 GHz bei Werten von ≤4,0, bevorzugt ≤3,5 oder weiter bevorzugt ≤3,0 und der elektrische Verlustfaktor tanδ (gemäß IEC 60250) bei 1 MHz bei Werten von ≤0,05, bevorzugt ≤0,01 oder weiter bevorzugt ≤0,005. Ähnliche Werte sind auch für Anwendungen im Gigahertz Bereich erwartbar.

In anderen Ausführungen der Erfindung erhält man Photopolymere mit herausragenden thermomechanischen Eigenschaften. So können Wärmeformbeständigkeitswerte (ISO 75, HDT-A) von ≥100 °C, bevorzugt von ≥150°C, weiter bevorzugt von ≥175 °C und besonders bevorzugt von ≥200 °C erhalten werden. In manchen Fällen werden sogar ≥250 °C erhalten.

In einer Ausführung der Erfindung erhält man Photopolymere mit Zugfestigkeiten (ISO 527-2) von ≥40 MPa bis bevorzugt ≥80 MPa, bevorzugt ≥50 MPa bis ≥70 MPa und besonders bevorzugt von ≥60 MPa. Gleichzeitig belaufen sich bevorzugt die E-Module auf ≥2 GPa, bevorzugt ≥3 GPa, weiter bevorzugt ≥4 GPa und besonders bevorzugt ≥5 GPa. Die Bruchdehnungen variieren üblicherweise zwischen 0,5% und 30% oder zwischen 1 und 10% und sind stark abhängig von der Höhe der Wärmeformbeständigkeit (üblicherweise je höher die Wärmeformbeständigkeit, desto niedriger die Bruchdehnung).

Ein weiterer entscheidender Vorteil der Erfindung liegt darin, dass die erfindungsgemäße Harzzusammensetzung die Flammschutzmittel der Komponente C gut in der Matrix der Harzzusammensetzung halten kann und dadurch Migration, die im Stand der Technik insbesondere bei thermischer Belastung auftritt (z.B. Nachhärtung von Grünteilen oder auch thermische Langzeitbelastung von finalen Bauteilen), verhindert. Damit wird verhindert, dass der Flammschutz der gedruckten Bauteile über die Zeit verloren geht. Besonders gut verhindert die beschriebene Harzzusammensetzung den Austritt von Flammschutzmitteln, insbesondere flüssigen phosphorbasierten Flammschutzmitteln.

Bevorzugt hat die flammhemmende flammhemmende chemische Verbindung eine oder mehrere polymerisierbare Gruppen, die in das finale Polymernetzwerk einpolymerisieren kann und an das Netzwerk gebunden ist. Besonders bevorzugt besitzt der Flammschutzmittel ein hohes Molekulargewicht, beispielsweise verringern Oligomere oder Polymere die Migration aus dem Material heraus. Bevorzugt sind die Molekulargewichte besagter Flammschutzmittel ≥400 g/mol, weiter bevorzugt ≥700 g/mol, noch weiter bevorzugt ≥1000 g/mol und insbesondere bevorzugt ≥2000 g/mol. Darüber hinaus liegt der große Vorteil dieser Flammschutzmittel darin, dass sie auch bei höherer Temperatur über lange Zeiträume nicht aus dem Material herausmigrieren bzw. sich nicht thermisch zersetzen oder abdampfen. Dadurch bleibt der Flammschutz auch bei dauerhafter Aussetzung hoher Umgebungstemperaturen erhalten.

Hier sind insbesondere phosphorbasierte flammhemmende chemische Verbindung (Flammschutzmittel) von Vorteil. Eine weitere notwendige Voraussetzung für viele Anwendungen ist, dass diese phosphorbasierten Flammschutzmittel auch über längere Zeit hydrolysebeständig sind. Ansonsten können sich Teile des Flammschutzmittels abbauen, was den Flammschutz des Polymers vermindert. In manchen Fällen kann darüber hinaus auch Phosphorsäure entstehen, die die elektrischen Isolationseigenschaften der Photopolymere verschlechtert und zu gefährlichen Kurzschlüssen in elektronischen Komponenten führen kann. Besonders bevorzugt sind daher hydrolysebeständige Flammschutzmittel, um die synergistische Flammschutzwirkung im erfindungsgemäßen Polymer bzw. Photopolymer aufrecht zu erhalten. Folglich eignen sich Komponenten wie roter Phosphor oder 2-Hydroxyethyl-(Meth)acrylat-Phosphat nicht besonders gut als Flammschutzmittel zur Verwendung im Rahmen der vorliegenden Erfindung, da sie mit Feuchtigkeit zu Phosphorsäure hydrolysieren können.

Ein weiterer Aspekt der Erfindung ist der Erhalt von sehr isotropen Materialien. Dies ist aufgrund des schichtweisen Aufbaues von 3D gedruckten Formkörpern durchaus überraschend.

Viele Anwendungen benötigen isotrope Materialeigenschaften hinsichtlich mechanischer, thermomechanischer und elektrischer Eigenschaften.

In einer weiteren Ausführung der Erfindung besitzen die erhaltenen finalen Photopolymere eine exzellente UV-Langzeitbeständigkeit bzw. UV-Langzeitbewitterung (gemäß ISO 4892-2) im Vergleich zu herkömmlichen Photopolymeren. Dabei können in bevorzugter Weise die erfindungsgemäßen Polymere ≥50%, bevorzugt ≥60%, weiter bevorzugt ≥70% und besonders bevorzugt ≥80% ihrer insbesondere mechanischen Ausgangseigenschaften (z.B. ISO 527-2 oder ISO 178) im Vergleich zu 0 Stunden UV-Bewitterung erhalten.

In einer weiteren Ausführungsform der vorliegenden Erfindung besitzen die erhaltenen finalen Photopolymere eine exzellente thermische Langzeitbeständigkeit. Das heißt, dass die mechanischen und elektrischen Werte über lange Zeiträume bei lastloser Lagerung bei erhöhten Temperaturen (üblicherweise zwischen 80 bis 300 °C) weitestgehend erhalten bleiben oder nach langer Exposition zumindest noch 50% der Ausgangseigenschaften aufweisen (vgl. relativer Temperaturindex RTI, gemäß UL746B). Der RTI ist folglich ein Maß für die thermische Alterungsbeständigkeit bzw. Dauertemperaturbeständigkeit von Polymeren und kann in die Kenngrößen Zugfestigkeit (RTI str), Durchschlagfestigkeit (RTI elec) und Schlagfestigkeit (RTI imp) unterteilt werden. In manchen Ausführungen besitzen die erfindungsgemäßen Photopolymere einen RTI (UL 746B) von ≥125 °C, ≥150 °C, weiter bevorzugt ≥175 °C, und besonders bevorzugter ≥200 °C aufweist.

Gleiches gilt für die Langzeitbeständigkeit der Photopolymere gegen feuchte Wärme (z.B. 35-95 °C bei 60-100% relativer Luftfeuchtigkeit) oder bei dauerhaftem Wasserkontakt (in Wasser untergetaucht). Hier ist vor allem die Hydrolysebeständigkeit des eingesetzten Flammschutzes hervorzuheben, der zum Erhalt der Flammschutzeigenschaften und in manchen Ausführungen der Isolationseigenschaften beiträgt. Der Flammschutz in den erfindungsgemäßen Photopolymeren zeigt auch nach längeren Zeiträumen mit Feuchtigkeits- und Wasserkontakt keine Anzeichen von Hydrolyse.

Unter Langzeitbeständigkeit werden hier insbesondere Zeiträume von 500, 1000, 2000, 5000 oder 20000 Stunden verstanden. Ein weiterer Vorteil ist die Beständigkeit gegen Temperaturschock, wobei hier die Photopolymere schnellen Temperaturwechselzyklen beispielsweise zwischen -50 und +150 °C ausgesetzt werden, ohne dass die getesteten Geometrien wesentlichen optische oder materialtechnische Auffälligkeiten bzw. Veränderungen aufweisen.

In einer weiteren Ausführung der Erfindung besitzen die erhaltenen finalen Photopolymere sehr niedrige Vakuumausgasungswerte (gemäß ECSS-Q-ST-70-02C) und weisen eine sehr niedrige Bildung von Rauchgasen (gemäß NF X 70-100) und/oder eine niedrige Rauchentwicklung (gemäß EN ISO 5659-2) auf.

In einer weiteren Ausführung der Erfindung werden die erhaltenen finalen Photopolymere als nicht zytotoxisch nach ISO 10993-5 eingestuft und weisen keine Irritation nach ISO 10993-23 und können folglich in medizinischen Geräten eingesetzt werden.

Ein weiterer Aspekt der Erfindung ist die hohe Isotropie der Bauteile, die bei der Verarbeitung in einem Hot Lithography Prozess auftritt. Vor allem die Mittelwerte der mechanischen Kennwerte in X-Y- bzw. Z-Druckrichtung weichen kaum voneinander ab (Abweichung ≤10%, bevorzugt ≤5% vom Vergleichswert), was bei 3D Druckprozessen eher ungewöhnlich ist.

Die in der Aufzählung angeführten Vorteile betreffend mechanische, thermomechanische, elektrische, Flammschutz- und Langzeitstabilitätseigenschaften der Erfindung sind insbesondere in ihrer Kombination äußerst überraschend und vorteilhaft für viele Anwendungen für 3D gedruckte Bauteile.

In vorteilhafter Weise können aus der erfindungsgemäßen Harzzusammensetzung Photopolymere für elektrische Isolierkörper erhalten werden. Durch den Zusatz von elektrisch leitfähigen Substanzen/Additiven können die aus der erfindungsgemäßen Harzzusammensetzung erhaltenen Photopolymere auch elektrisch leitfähig gemacht werden, wobei der Oberflächenwiderstand von ≥10¹² Ω (isolierend) in den elektrostatisch ableitend oder dissipative Bereich zwischen 10¹¹ und 10⁵ Q gesenkt oder in speziellen Fällen gar ≤10⁵ Q werden kann und folglich die aus der erfindungsgemäßen Harzzusammensetzung erhaltenen Photopolymere elektrostatisch leitfähig werden können. Beispiele für elektrisch leitfähige Substanzen/Additive sind metallische Füllstoffe, Pulver und Nanopartikel, wie beispielsweise Silber, Zinn, Nickel und Kupfer, Carbon-Nanotubes, Graphen und Graphit. Diese können teilweise schon in geringen Mengen zu einer Verringerung des Isolationscharakters des Photopolymers führen. Auf besonderes technisches Interesse stößt hierbei der ESD-Bereich (electrostatic discharge) üblicherweise zwischen 10⁹ und 10⁵ Q, um elektrische Aufladung von Bauteilen und damit verbundenen elektrische Entladungen zu vermeiden. Mithilfe der aus der Harzmischung erhaltenen Photopolymere entstehen folglich dreidimensionale leitfähige, hochtemperaturbeständige und flammgeschützte Kunststoffformkörper, die beispielsweise als ESD-Materialien in harschen Umgebungen eingesetzt werden können.

Auch Harzzusammensetzungen umfassend eine Komponente C bestehend aus mindestens einer halogenierten flammhemmenden Komponente können ebenfalls zu sehr guten Materialeigenschaften führen. Auch hier sind wieder polymerisierbare und/oder hochmolekulare halogenierte, insbesondere bromierte, Verbindungen zu bevorzugen. Aufgrund der bereits eingangs erwähnten Nachteile von halogenierten Flammschutzmitteln ist ihr Einsatz aber nicht bevorzugt.

Die Erfindung umfasst weiters ein Verfahren zur Herstellung eines dreidimensionalen Formkörpers umfassend:
- Bereitstellen einer erfindungsgemäßen Harzzusammensetzung
- Durchführen eines lichtinduzierten Strukturierungsschritts zur Herstellung eines Grünkörpers.

Bevorzugt erfolgt der lichtinduzierte Strukturierungsschritt in einem Temperaturfenster von 30 -120 °C, bevorzugt zwischen 50-100 °C und weiter bevorzugt zwischen 65-90 °C.

Aus den oben genannten Gründen wird der Grünkörper mindestens einem Postprocessing-Schritt ausgewählt aus Zentrifugieren, Reinigen mit einem Lösungsmittel für unstrukturierte Harzzusammensetzung, Nachhärten, insbesondere strahlungsinduziertes und/oder thermisches Nachhärten, Einbringen mindestens eines Metallteils, Halbmetallteils, Keramikteils und/oder Microchips, Beschichten oder Abscheiden von Metallschichten, Keramikschichten, Kunststoffschichten und/oder organischen und/oder anorganischen Schichten und Löten unterzogen.

Zu typischen Postprocessing Methoden gehören beispielsweise die Reinigung mittels Zentrifugalkräften in Zentrifugen, die Reinigung mittels Fluiden, z.B. mit Lösungsmitteln unter Einsatz von turbulenten Strömungen, gerichteten Strahlen, Ultraschall, Dampf, Aerosolen und/oder in Druckwechselverfahren, die Reinigung mittels Gasen und/oder gerichteten Gasströmen (z.B. Druckluft, beheizte Druckluft), das Trocknen von Bauteilen, das Nachhärten, welches auf verschiedene Art und Weisen durchgeführt werden kann (z.B. thermisch, strahlungsinduziert, Mikrowellen), die Entfernung von Stützstrukturen sowie das Färben, das globale oder selektive Beschichten/Abscheiden von z.B. Metall-, Keramik-, Kunststoff-, anorganischen oder organischen Schichten, das Lackieren, das Bestücken von 3D gedruckten Bauteilen (z.B. mit Metallteilen, Keramikteilen, Halbleitern, Mikrochips, Pins, Kabeln, elektrischen Kontakten), Reflow-Löten und dergleichen. Es kann auch von Vorteil sein, die Metallteile, Pins, die elektrischen Kontakte, Kabel und/oder Mikrochips vor dem Nachhärten in den gedruckten Grünkörper einzubringen und die Nachhärtung erst im Nachgang durchzuführen, da der Grünkörper noch weicher ist und einen geringeren Modul aufweisen kann. Dabei kann sich das während des Nachhärtevorganges gegebenenfalls schrumpfende Photopolymer ideal an die eingebrachten Geometrien anpassen. Weiters können andere generative Fertigungsverfahren, wie fused deposition modelling, subtraktive Verfahren, Fiber Placement-Verfahren, Fiber Coating-Verfahren, Bohrverfahren, Lötverfahren, Dye Coating-Verfahren, Die-Bonding-Verfahren, Kalt- und Heißplasmabehandlungs-Verfahren in entsprechenden Vorrichtungen, Wire-Bonding Verfahren, Spray Coating und Micro-Droplet-Verfahren, Guss-Verfahren, um Bauteile zu befüllen, Schneide- und Fräsverfahren, Pick-and-Place-Verfahren wie zum Beispiel Roboterarme und viele andere Objektmanipulatoren zum Einsatz kommen. Alle genannten Postprocessing-Verfahren können, sofern sinnvoll, in beliebiger Reihenfolge, gar nicht, gleichzeitig, nacheinander und beliebig oft sowie manuell und/oder semiautomatisch und/oder vollautomatisch durchgeführt werden.

Ein klassischer Ablauf eines solchen Verfahrens ist beispielsweise das Bereitstellen der erfindungsgemäßen Harzzusammensetzung, der additive Aufbau von mindestens einem dreidimensionalen Bauteil, optional das Zentrifugieren der Bauteile zur Entfernung von nicht gehärtetem Restharz der erfindungsgemäßen Harzzusammensetzung, optional das Reinigen der Bauteile zur Entfernung von nicht gehärtetem Restharz mit Lösungsmitteln, das Nachhärten der Bauteile (z.B. UV, thermisch und/oder Mikrowellen), sowie weitere Schritte zum Erhalt des Endproduktes. Die Prozessschritte der Entfernung von eventuell während des generativen Aufbaus vorhandenen Stützstrukturen sowie des Ablösens der Bauteile von der Bauplattform kann dabei je nach Belieben und Sinnhaftigkeit zwischen jedem der genannten Schritte erfolgen.

Die Harzzusammensetzungen der vorliegenden Erfindung können für die Herstellung verschiedener Arten von dreidimensionalen Objekten verwendet werden. Beispiele für Anwendungen von 3D-gedruckten Objekten sind Konsumgüter, Sportartikel, elektronische, elektrische und elektromechanische Komponenten, Steckverbinder, Gehäuse, Bauteile aus dem Automobilsektor, Mobilität, Luft- und Raumfahrt, Elektromobilität, Kommunikationstechnik, Computertechnik, Militärtechnik, medizinische Geräte, Medizintechnik, Konsumgüter, Sportindustrie, Energieindustrie, gedruckte Elektronik, Bahnindustrie, zahnmedizinische und kieferorthopädische Anwendungen wie beispielsweise Zahnschienen, dentale Aligner, Regulierungen oder gesichtschirurgische Anwendungen.

Besonders geeignet sind die erfindungsgemäßen Harzzusammensetzungen zur Herstellung von elektronischen Komponenten, wie elektrische Steckverbinder insbesondere Rundstecker, Leiterplattenanwendungen (z.B. PCB), ESD-Bauteilen usw.

### Beispiele:

Die folgenden Beispiele sind als repräsentativ und beispielhaft zu verstehen, dienen dem Zweck der Veranschaulichung verschiedener möglicher Ausführungsformen der Erfindung und sollen die offenbarte Erfindung in keiner Weise einschränken.

Mithilfe der angeführten Beispiele soll gezeigt werden, dass für mittels strahlungshärtenden additiven Fertigungsverfahren (z.B. SLA, DLP, LCD, Inkjet, 2-Photonen-Lithographie) hergestellte 3D-Druck-Bauteile die Kombination der beanspruchten Komponenten der erfindungsgemäßen Harzzusammensetzung bestmögliche Brandeigenschaften ermöglicht. Dies bezieht sich nicht nur auf Kurzzeiteigenschaften, sondern besonders auf das Aufrechterhalten der Flammschutzeigenschaften. Viele Flammschutzmittel (FM), besonders flüssige sowie nicht reaktive FM, neigen zu Migration. Somit verschlechtert sich die Brandbeständigkeit stetig über die Zeit, bis die Brandklasse nicht mehr erfüllt werden kann. Gerade bei höheren Temperaturen wird diese Migration begünstigt und beschleunigt. Die auf Basis der erfindungsgemäßen Harzzusammensetzung hergestellten Polymere bzw. Photopolymere sollen speziell bei Langzeiteinsatz die Brandschutzeigenschaften aufrechterhalten. Weiters soll der Vorteil von hochmolekularen beziehungsweise reaktiven FM auf den Fertigungsprozess ausgearbeitet werden. Es wird vermutet, dass diese besonders bei den nicht nachvernetzten Bauteilen wesentliche Vorteile gegenüber niedermolekularen und nichtreaktiven FM zeigen. Ebenfalls sollen die Reinigung, Trocknung und Nachhärtung erleichtert sowie die finalen Endeigenschaften besser sein. Eine Weichmachung durch FM sollte durch den Einsatz von BMI nahezu unterdrückt werden.

Zur Vereinfachung werden folgende Abkürzungen definiert: flammhemmende chemische Verbindung bzw. Flammschutzmittel (FM), erfindungsgemäßes Beispiel (B), Vergleichsbeispiel (VB) jeweils mit entsprechender Nummerierung versehen, Bismaleimid (BMI). Unter Molekulargewicht wird das Zahlenmittel der Molmasse (Mn) verstanden, welches mittels Gel-Permeations-Chromatographie nach ISO 16014 gegen Polystyrolstandards mit einem Brechungsindex-Detektor bestimmt werden kann. Bei Angaben zur Zusammensetzung der Harzformulierung handelt es sich, falls nicht anders definiert, um Angaben in Gewichtsprozent (% oder Gew.-%).

**Tabelle 1: Übersicht zu den eingesetzten Flammschutzmitteln**

| | Molekulargewicht | Aggregatzustand | reaktive Gruppe | chemische Basis |
|---|---|---|---|---|
| FM1 | >700 g mol⁻¹ | flüssig | keine | phosphorbasiert |
| FM2 | 340 g mol⁻¹ | flüssig | keine | phosphorbasiert |
| FM3 | unbekannt | flüssig | Allyl | phosphorbasiert |
| FM4 | 488 g mol⁻¹ | fest | keine | phosphorbasiert |
| FM5 | 3000 g mol⁻¹ | flüssig | Acrylat | phosphorbasiert |
| FM6 | unbekannt | fest | keine | phosphorbasiert |

Informationen zu den in dieser Studie eingesetzten Flammschutzmitteln (FM) sind aus Tabelle 1 zu entnehmen. FM1 ist (1-methylethylidene)di-4,1-phenylenetetraphenyldiphosphat und dessen Oligomere, FM2 ist die Reaktionsmasse von 3-Methylphenyldiphenylphosphat, 4-Methylphenyldiphenylphosphat, Bis(3-methylphenyl)phenyl phosphat, 3-Methylphenyl-4-methylphenyl-phenylphosphat und Triphenylphosphat, FM3 ist Struktol XP3795 (Schill+Seilacher GmbH, Böblingen), FM4 ist N,N'-Bis(6-oxido-6H-dibenz[c,e][1,2]oxaphosphiorin-6-yl)-1,2-ethandiamin, FM5 ist Raylok 1722 (Allnex, Stuttgart) und FM6 ist roter Phosphor.

### Probenherstellung

Sämtliche Photopolymere wurden auf einer Caligma^{®} 200 (Cubicure GmbH, Wien, 405 nm) hergestellt. Die Wannentemperatur bei B1, VB1, B2, B3, B4 und VB4 war 83 °C, bei VB2 und VB3 47 °C und bei B5 und VB5 70 °C. Die Layerhöhe wurde mit 100 µm festgesetzt, die Laserleistung betrug 100 % und der Hatchabstand 10 µm. Einzig VB2 und VB3 wurden doppelt geschrieben, die anderen einfach. Die Reinigung erfolgte in Complete A (Cubicure GbmH, Wien) mittels Ultraschall-Reinigungsgerät Emmi 20 HC (EMAG AG, Mörfelden-Walldorf) für 1 min. Nach einer Trocknungszeit bei 80 °C über 2 h in einem Universalschrank UF55 (Memmert GmbH + Co. KG, Schwabach) wurden die Probekörper "as printed" (Grünkörper) getestet. Die UV-Nachvernetzung für sämtliche Photopolymere erfolgte für 10 min in einer Intelliray 400 (Uvitron International Inc., West Springfield). Die thermische Auslagerung bei B1, VB1, B2, B3, B4 und VB4 war bei 220 °C für 65 h, bei VB2, VB3, B5 und VB5 bei 200 °C für 10 h.

### Materialprüfung

Zugprüfungen gemäß ISO 527-2 wurden an einer Universalprüfmaschine ProLine Z010 (Zwick GmbH & Co. KG, Ulm) durchgeführt. Die Prüfgeschwindigkeit während der E-Modulbestimmung wurde für sämtliche B und VB mit 1 mm/min festgelegt. Bei VB2, VB3, VB5 und B6 wurde die Prüfgeschwindigkeit während der Streckphase auf 10 mm/min erhöht. Es wurden jeweils 3 Prüfkörper getestet.

Brandprüfungen wurden in Anlehnung an UL 94 durchgeführt. Die abgeänderten Probenmaße betrugen 95 x 12,7 x Dicke mit variablen Maßen in mm, wobei je nach Photopolymer 0,5 mm, 1 mm, 2 mm und 3 mm gewählt wurde. Als Zündquelle wurde eine Flamme mit 20 mm Höhe und einer Brennleistung von 50 W gewählt. Die Proben wurden vertikal eingespannt und mittig so positioniert, dass der Abstand zwischen Brennerkante und unterer Probenkante 10 mm betrug. Es wurde für 5 Sekunden beflammt, danach wurde der Brenner aus der Probe geführt. Erlosch die Probe, wurde dieser Schritt wiederholt. Die Prüfung galt als bestanden, wenn die Gesamtbrenndauer 10 Sekunden nicht überschritten hatte. Hierzu wurden die Nachbrennzeiten nach der ersten und zweiten Beflammung addiert. Eine bestandene Brandprüfung ist in der Tabelle mit "O" eine nicht bestandene Brandprüfung mit "X" vermerkt. Die erfindungsgemäßen Photopolymere dürften geeignet sein, Flammprüfungen nach UL 94 mit V-0 Klassifizierung bei Wandstärken von ≤1,50 mm, bevorzugt von ≤1,00 mm, weiter bevorzugt von ≤0,75 mm und besonders bevorzugt von ≤0,50 mm bestehen.

Zur Bestimmung des Masseverlustes bei erhöhten Temperaturen wurden die ungeprüften Brandprüfkörper herangezogen. Je Beispiel beziehungsweise Vergleichsbeispiel wurden 2 Brandprüfköper zu jeweils zwei verschiedenen Dicken verwendet. Der Masseverlust wurde als die relative Masseänderung des Probekörper zwischen nachgehärteten und ausgelagerten Proben als arithmetisches Mittel definiert.

Die Viskositätsbestimmung der Formulierungen wurde auf einem Anton Paar MCR 102 Rheometer im Rotationsmodus (PP-25, Scherrate 50 s⁻¹, bei ausgewählter Temperatur und einem Spalt von 1 mm) durchgeführt. Im Falle eine Temperaturrampe wurde ein Temperaturprogramm 20-70°C mit einer Heizrate von 2 K min⁻¹ gewählt.

**Tabelle 2: Zusammensetzung der Harze, wobei VB für Vergleichsbeispiel und B für Beispiel steht. Zur besseren Übersicht wurden die Formulierungszusammensetzungen auf ganze Prozentzahlen auf- bzw. abgerundet.**

| Komponente | VB1 | VB2 | VB3 | VB4 | VB5 | VB6 | VB7 | VB8 | VB9 | B1 | B2 | B3 | B4 | B5 | B6 | B7 | B8 | B9 |
|---|---|---|---|---|---|---|---|---|---|---|---|---|---|---|---|---|---|---|
| | [Gew.-%] | | | | | | | | | | | | | | | | | |
| Urethandiacrylate | 20 | - | - | - | - | - | - | - | 35 | 18 | 18 | - | - | - | - | - | - | - |
| Polycarbonat-dimethacrylate | - | 60 | 66 | - | - | - | - | - | 40 | - | - | - | - | - | - | - | - | - |
| Ethoxyliertes Bisphenol A Diacrylate | - | - | - | - | - | - | - | - | 15 | - | - | - | - | - | - | - | 19 | - |
| Tris(2-hydroxy ethyl)isocyanurat triacrylat | - | - | - | 40 | 47 | 71 | 60 | 60 | - | - | - | - | - | - | 42 | 22 | - | 20 |
| Triallyl isocyanurate | 15 | 5 | 5 | - | - | 18 | 20 | 20 | - | 13 | 13 | - | - | - | - | 9 | - | - |
| (octahydro-4,7-methano-1H-indenediyl)bis(methylene)diacrylat | 15 | - | - | - | - | - | - | - | - | 14 | 14 | 42 | 42 | 42 | - | 12 | - | - |
| ACMO | 20 | 25 | 29 | - | - | - | - | - | - | 18 | 18 | 12 | 12 | 12 | - | - | 28 | 25 |
| BMI 1 | 17 | - | - | - | 19 | - | - | - | - | 15 | 15 | 20 | 20 | 20 | 17 | 22 | 21 | 9 |
| BMI 2 | 10 | - | - | - | 11 | - | - | - | - | 9 | 9 | 11 | 11 | 11 | 10 | 12 | 12 | 5 |
| BMI 3 | 3 | - | - | - | 3 | - | - | - | - | 3 | 3 | 3 | 3 | 3 | 3 | 4 | 4 | 1 |
| Citraconimid | - | - | - | - | 17 | - | - | - | - | - | - | - | - | - | 15 | 7 | 2 | - |
| Diallylbisphenol A | - | - | - | - | 3 | - | - | - | - | - | - | 3 | 3 | 3 | 2 | - | - | - |
| TPU | - | - | - | - | - | - | - | - | - | - | - | - | - | - | - | - | 5 | - |
| FM1 | - | 10 | - | - | - | 11 | - | 20 | - | 10 | - | 9 | - | - | 11 | 12 | 9 | 10 |
| FM2 | - | - | - | 20 | - | - | - | - | - | - | - | - | - | 9 | - | - | - | - |
| FM3 | - | - | - | - | - | - | - | - | - | - | - | - | 9 | - | - | - | - | - |
| FM4 | - | - | - | - | - | - | - | - | - | - | 10 | - | - | - | - | - | - | - |
| FM5 | - | - | - | 40 | - | - | 20 | - | - | - | - | - | - | - | - | - | - | 30 |
| FM6 | - | - | - | - | - | - | - | - | 10 | - | - | - | - | - | - | - | - | - |

BMI1 bis BMI3 wurden aus folgenden Komponenten ausgewählt: 1,3-Bis((3-methyl-2,5-dioxopyrrol-1-yl)methyl)benzol, m-Xylylenbismaleimid, 4,4'-Bismaleimidodiphenylmethan, 1,6-Bismaleimido-(trimethyl)hexan, 1,6-Bismaleimido-(trimethyl)hexan (Isomerengemisch aus 2,2,4- und 2,4,4-Trimethyl), Methylendianilinbismaleimid, N,N'-(4-Methyl-1,3-phenylen)dimaleimid, N,N'-Hexamethylenbismaleimid, 2,4-Bismaleimidotoluol;
Das Citraconimid bestand aus einer Mischung aus einem difunktionellen aromatischen Citraconimid-Monomer und dessen Oligomeren.

**Tabelle 3: Resultate für Photopolymereigenschaften Vergleichsbeispiele (VB) und Beispiele (B)**

| VB/B | Zugfestigkeit [MPa] | | | Masseverlust [Gew.-%] | | Brandprüfung [mm] | | | | HDT-A |
|---|---|---|---|---|---|---|---|---|---|---|
| | Grün | Postprocessed | Ausgelagert | 10h bei 200°C | 65h bei 220°C | 0,5 | 1,0 | 2,0 | 3,0 | [°C] |
| VB1 | 34,0 ±0,9 | 39,5 ±1,7 | i.O. | - | 1,7 | X | X | X | O | >100 |
| VB2 | 15,5 ±0,4 | 42,6 ±0,3 | i.O. | 3,1 | - | X | X | X | X | 55 |
| VB3 | 24,1 ±0,4 | 48,4 ±1,4 | i.O. | 0,2 | - | X | X | X | X | 60 |
| VB4 | 14,5 ±1,0 | 20,3 ±1,3 | Risse | 16,5 | - | X | X | O | O | - |
| VB5 | 20,9 ±9,6 | Bricht vor Messung | - | - | - | X | X | X | O | - |
| VB6 | 36,9 ± 2,2 | Risse | Risse | - | - | X | X | X | X | - |
| VB7 | 38,3 ± 5,6 | Risse | Risse | - | - | X | X | X | X | - |
| VB8 | 20,3 ± 1,4 | Risse | Risse | - | - | X | X | X | O | - |
| VB9 | - | - | - | - | - | X | X | X | O | - |
| B1 | 32,5 ±0,6 | 41,0 ±1,4 | i.O. | - | 2,8 | X | X | O | O | - |
| B2 | 38,2 ±1,1 | 40,5 ±0,3 | i.O. | - | 2,2 | X | X | O | O | - |
| B3 | - | 21,3 ±0,7 | i.O. | - | 1,0 | X | O | O | O | - |
| B4 | - | 24,4 ±0,6 | i.O. | - | 1,1 | X | O | O | O | - |
| B5 | - | 18,0 ±0,3 | i.O. | - | 1,2 | X | X | O | O | - |
| B6 | 22,6 ± 6,3 | 85,8 ± 3,3 | i.O. | - | - | O | O | O | O | >230 |
| B7 | 41,7 ± 5,9 | 70,8 ± 7,2 | i.O. | - | - | O | O | O | O | >250 |
| B8 | 47,0 ± 1,6 | 90,9 ± 4,4 | i.O. | - | - | X | X | O | O | >150 |
| B9 | - | - | i.O. | - | - | - | - | - | O | - |

### Beschreibung der Formulierungen

Die Formulierung VB3 beschreibt eine photoreaktive Formulierung nach Stand der Technik ohne FM. VB2 beschreibt das gleich Photopolymer mit einem oligomeren, phosphorbasierten Flammschutzmittel FM1. VB1 und VB5 beschreiben eine Formulierung im Wesentlichen bestehend aus Acrylat- und Maleimid-Komponenten ohne Flammschutzmittel (im Weiteren als Acrylat-Maleimid-Matrix beschrieben). VB4 beschreibt ein photoreaktive Isocyanurat-Acrylat-Formulierung und einer Mischung aus zwei Flammschutzmitteln aus dem niedermolekularen FM2 und dem polymerisierbaren FM5. VB6 und VB8 beschreiben eine Acrylat- und Allylformulierung mit hohem Isocyanuratanteil mit unterschiedlichen Konzentrationen an hochmolekularen Flammschutzmittel FM1. VB7 Acrylat- und Allylformulierung mit hohem Isocyanuratanteil mit polymerisierbaren FM5. VB9 beschreibt eine photoreaktive Formulierung mit rotem Phosphor als FM. B1 bis B9 beschreiben Acrylat-Maleimid-Matrizen mit Flammschutzmitteln.

### Grünfestigkeit

Die direkt nach dem 3D Druck erhaltenen Beispiele zeigten durchwegs hohe Zugmodule von ≥1 GPa und Grünfestigkeiten von ≥20 MPa. Es ist insofern davon auszugehen, dass für die gezeigten Beispiele keine größeren Probleme im Postprocessing zu erwarten sind. Im Gegensatz dazu zeigten VB2 und VB4 Grünfestigkeiten von -15 MPa, was die Handhabung im Postprocessing verkomplizieren könnte.

### Postprocessing, Auslagerung und Masseverlust

Bereits nach dem Postprocessing wiesen die Vergleichsbeispiele VB6 bis VB8 Risse in den Prüfkörpern auf. Nach der thermischen Auslagerung hatten sich auch Risse in den Prüfkörpern von VB4 gebildet. Die Vergleichsbeispiele VB1 bis VB3 und VB5 sowie alle Beispielproben (B1-B8) hingegen kamen rissfrei aus dem Postprocessing und der Auslagerung. Ein großer Masseverlust von ~17 Gew.-% nach den Auslagerungsversuchen konnte vor allem bei VB4 mit dem niedermolekularen FM2 festgestellt werden. Eine vergleichbares Acrylat-Maleimid Photopolymer B5 auf Basis der erfindungsgemäßen Harzzusammensetzung mit FM2 zeigte einen Masseverlust von ~1 Gew.-%. Hier wird deutlich, dass die Acrylat-Maleimid Matrix der erfindungsgemäßen Harzzusammensetzung das niedermolekulare Flammschutzmittel bei erhöhter Temperatur besser in der Matrix halten kann. Es kann daher schlussgefolgert werden, dass die Migration des Flammschutzes aus der Acrylat-Maleimid Matrix der erfindungsgemäßen Harzzusammensetzung überraschenderweise auch bei hohen Temperaturen weitgehend unterbunden wird.

### Zugfestigkeit des finalen Photopolymers

Die Zugfestigkeiten von VB1 und VB2 lagen bei -40 MPa. Für VB3 und VB4 konnten Zugfestigkeiten von ~48 MPa bzw. -20 MPa. B1 und B2 zeigten Festigkeitswerte ~40 MPa, wohingegen für B3 nur -20 MPa gemessen wurden. Deutlich bessere Zugfestigkeiten konnten für B6 bis B8 zwischen ~70 und ~90 MPa erreicht werden. Die Beispiele zeigen, dass die Photopolymeren auf Basis der erfindungsgemäßen Harzzusammensetzung sehr hohe Zugfestigkeiten erreichen können.

### Flammprüfungen

Die Vergleichsbeispiele VB3 ohne FM sowie das Vergleichsbeispiel eines flammgeschützten Stand der Technik-Photopolymers VB2, VB6 und VB7 mit FM wiesen auch bei 3 mm Dicke und geringeren Dicken keine V-0 Klassifizierung nach UL94. Die Acrylat-Maleimid Matrix ohne FM VB1 und VB5 sowie das Stand der Technik-flammgeschützte Polymer VB5 wiesen eine V-0 Einstufung bei 3 mm Dicke auf, fielen jedoch bei geringeren Dicken durch. Einzig VB4 konnte eine V-0 bei 3 und 2 mm aufweisen. Jedoch enthielt die Formulierung 60% FM, was die 2 mm wieder relativiert.

Ganz im Gegensatz zu den Vergleichsbeispielen konnten sämtliche gezeigten Beispiele (B1-B8) den UL94 Flammtest bei 3 und 2 mm Dicke mit einer V-0 Klassifizierung bestehen. Besonders überraschende Ergebnisse konnten für die Photopolymere B3 und B4 aus Basis der erfindungsgemäßen Harzzusammensetzung mit einer V-0 bei einer minimalen Wandstärke von 1 mm und für die Photopolymere B6 und B7 mit einer minimalen Wandstärke von 0,5 mm erreicht wurden, wobei B7 den Test auch noch bei 0,35 mm erfolgreich bestand.

Der direkte Vergleich zwischen den Acrylat-Maleimid Matrizen ohne FM und den gleichen Formulierungen mit FM1 (VB1 und B1 sowie VB5 mit B6) zeigt eine überraschende, signifikante Verbesserung des Flammschutzes durch die Hinzugabe von sehr geringen Mengen an FM.

Für den Sauerstoffindex (ISO 4589-2) wurde für VB9 ein Ergebnis von <28%. Für B6 wurde ein Sauerstoffindex ≥32% erreicht. In beiden Fällen wurden 3 mm dicke Proben getestet. Wiederum konnte das Photopolymer B6 auf Basis einer erfindungsgemäßen Harzzusammensetzung das Photopolymer VB9 nach Stand der Technik klar übertreffen.

Zusammenfassend lässt sich sagen, dass sich der synergistische Effekt zwischen den Acrylat-Maleimid Matrizen und dem phosphorbasierten Flammschutz im Flammtest besonders gut beobachten lässt und deutlich bessere Ergebnisse liefert als die Vergleichsbeispiele.

### Heat Deflection Temperature-A (HDT-A)

Die Stand der Technik-Photopolymere VB3 und VB5 weisen eine HDT-A von 60 °C auf, was vor allem für elektronische Anwendungen einen sehr niedrigen und daher ungünstigen Wert darstellt. Im Gegensatz dazu weist B8 eine HDT-A von 150 °C, B6 250 °C und B7 sogar 290 °C auf. Insgesamt kann in allen gezeigten Beispielen von einer HDT-A ≥150 °C ausgegangen werden.

### Thermische Langzeitstabilität - Prophetisches Beispiel

Zum Test der thermischen Langzeitstabilität wurden mittels Caligma^{®} gedruckte Zugprüfkörper nach ISO 527-2 und Platten von zwei flammgeschützten Photopolymeren VB9 und B6 jeweils 5 Stück nach 0 Stunden und 1000 Stunden thermischer Exposition bei 200 °C gemessen. Die Ergebnisse zeigten, dass VB9 einen signifikanten Verlust der Zugfestigkeit und der Bruchdehnung vom Ausgangswert (0 Stunden Exposition) aufwies. Im Gegensatz dazu wurden für B6 annähernd gleichbleibende Zugfestigkeiten und Bruchdehnungen nach der Exposition festgestellt. Außerdem führte die Lagerung von Platten aus VB9 und B6 bei 200 °C für 1000 Stunden im Falle von VB9 zu erheblichem Verzug, wohingegen die Platten von B6 keinen wesentlichen Verzug aufwiesen. Weiters konnte keine Migration des FM aus B6 festgestellt werden. Die erhalten Ergebnisse zeigen eindeutig die überraschend gute thermische Langzeitbeständigkeit der erfindungsgemäßen Photopolymere auf Basis der erfindungsgemäßen Harzzusammensetzungen. Es ist davon auszugehen, dass das ausgewählte Beispiel einen RTI (UL 746B) von ≥125 °C aufweist.

### Flammgeschützte ESD-Materialien - Prophetisches Beispiel

In eine der erfindungsgemäßen Harzformulierung wurden zwischen 0,05 und 1 Gew.-% Carbon Nanotubes eingemischt und im Anschluss auf einer Caligma^{®} verdruckt und einem klassischen Postprocessing unterzogen. Die ermittelte Oberflächenwiderstand war ≤10⁹ Q und lag somit im Bereich von ESD-Materialien. Ähnliche Formulierungen zeigten, dass mit dem Zusatz von geringen Mengen an Carbon Nanotubes der Oberflächenwiderstand zwischen 10³ bis 10¹¹ Q eingestellt werden konnte.

### Zusammenfassung

Das synergistische Zusammenspiel der Acrylat-Maleimid Matrix mit dem nicht halogenierten FM führen zu herausragenden Flammklassifizierung bei niedrigen Wandstärken. Dies ist insofern überraschend, als in den Beispielen, gemessen an den Vergleichsbeispielen, nur geringe Mengen an phosphorbasiertem Flammschutzmittel eingesetzt wurden und trotzdem eine V-0 Klassifizierung nach UL94 bei deutlich niedrigeren Wandstärken erreicht werden und mittels 3D Druck auf dreidimensionale Formkörper angewendet werden konnte. Gleichzeitig führt die Kombination aus Acrylat-Maleimid Matrix mit nicht halogenierten FM zu Komponenten bei thermischer Langzeitbelastung nur eine sehr geringe Migration und hervorragende Langzeitstabilität auf.

## Patentansprüche

1. Harzzusammensetzung für ein strahlungshärtendes additives Fertigungsverfahren, insbesondere für ein lithographisches Fertigungsverfahren, umfassend:
a) eine Komponente A bestehend aus mindestens einer ungesättigten Kohlenstoffverbindung, bevorzugt ausgewählt aus der Gruppe bestehend aus Vinylgruppen, (Meth)acrylaten, (Meth)acrylamiden, Fumaraten, Styrolderivaten, Zimtsäurederivaten, Vinylamine, Vinylether, Vinylcarbamate, Vinylester und Allyl-Verbindungen sowie Mischungen daraus,
b) eine Komponente B ausgewählt aus der Gruppe bestehend aus Maleimiden, Citraconimiden, bevorzugt aromatisches difunktionelles Citraconimid, und Itaconimiden sowie Mischungen daraus,
c) eine Komponente C bestehend aus mindestens einer, bevorzugt nicht halogenierten, flammhemmenden chemischen Verbindung, wobei bevorzugt die Komponente C einen Schmelzpunkt von ≤90 °C, weiter bevorzugt von ≤70 °C, besonders bevorzugt von ≤50 °C und insbesondere bevorzugt einen Schmelzpunkt unter Raumtemperatur aufweist.
d) eine Komponente D bestehend aus mindestens einem Photoinitiator
sowie gegebenenfalls Additive.

2. Harzzusammensetzung nach Anspruch 1, **dadurch gekennzeichnet, dass**
Komponente A in Mengen von 10-90 Gew.%, bevorzugt in Mengen von 20-80 Gew.% und besonders bevorzugt in Mengen von 30-70 Gew.% in der Gesamtformulierung vorhanden ist,
Komponente B in Mengen von 10-90 Gew.%, bevorzugt in Mengen von 20-80 Gew.% und besonders bevorzugt in Mengen von 30-70 Gew.% in der Gesamtformulierung vorhanden ist,
Komponente C in Mengen von 0,1-50 Gew.%, bevorzugt in Mengen von 1-30 Gew.% und besonders bevorzugt in Mengen von 5-20 Gew.% in der Gesamtformulierung vorhanden ist,
Komponente D in Mengen von 0,1-20 Gew.%, bevorzugt in Mengen von 0,5-10 Gew.% und besonders bevorzugt in Mengen von 1-5 Gew.% in der Gesamtformulierung vorhanden ist,
wobei die Summe der Mengen der Komponenten A, B, C und D 100 Gew.-% nicht übersteigt.

3. Harzzusammensetzung nach Anspruch 1 oder 2, **dadurch gekennzeichnet, dass** die Komponente B einen Schmelzpunkt von ≤120 °C, bevorzugt von ≤100 °C, weiter bevorzugt von ≤90 °C und besonders bevorzugt von ≤80 °C aufweist.

4. Harzzusammensetzung nach Anspruch 1, 2 oder 3, **dadurch gekennzeichnet, dass** die Komponente B aus einer eutektischen Mischung aus Maleimiden, bevorzugt Bismaleimiden besteht, deren Schmelzpunkt ≤120 °C, bevorzugter ≤100 °C, weiter bevorzugt ≤90 °C und besonders bevorzugt ≤80 °C ist.

5. Harzzusammensetzung nach einem der Ansprüche 1 bis 4, **dadurch gekennzeichnet, dass** die Komponente C mindestens eine phosphorbasierte, bevorzugt polymerisierbare, flammhemmende Verbindung umfasst.

6. Harzzusammensetzung nach einem der Ansprüche 1 bis 5, **dadurch gekennzeichnet, dass** die Komponente C mindestens eine phosphorbasierte, oligomere oder polymere, flammhemmende Verbindung mit einem Molekulargewicht (Mn) von ≥ 400 g/mol, bevorzugt von ≥700 g/mol, weiter bevorzugt von ≥1000 g/mol und besonders bevorzugt von ≥2000 g/mol umfasst.

7. Harzzusammensetzung nach einem der Ansprüche 1 bis 6, **dadurch gekennzeichnet, dass** die Komponente C mindestens eine Verbindung gemäß der nachfolgenden Formel umfasst: 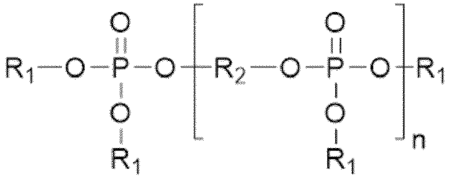 wobei R1 aus Methyl, Ethyl, linearem, verzweigtem oder cyclischem C3-C20 Alkyl, unsubstituiertem oder substituiertem Phenyl, Benzyl, Cyclopentyl oder Cyclohexyl, R2 aus unsubstituiertem oder substituiertem, linearem, verzweigtem oder cyclischem C1-C20 Alkyl, bevorzugt Phenylen, Phenyldimethylen, Biphenyl, Bisphenol-A, Bisphenol-F, Bisphenol-S, Cyclohexyl, Cyclohexyldimethylen, Bicyclohexyl gewählt ist und n eine Zahl von 0 bis 20, bevorzugt von 1 bis 10 darstellt.

8. Harzzusammensetzung nach einem der Ansprüche 1 bis 7, **dadurch gekennzeichnet, dass** die Komponente C mindestens eine hydrolysestabile flammhemmende Verbindung umfasst.

9. Harzzusammensetzung nach einem der Ansprüche 1 bis 8, **dadurch gekennzeichnet, dass** die Komponente A mindestens eine Isocyanurat- oder Cyanurat-Verbindung mit ungesättigten Kohlenstoffverbindungen, bevorzugt 1,3,5-Triallyl-1,3,5-triazin-2,4,6(1H,3H,5H)-trion, 2,4,6-Tris(allyloxy)-1,3,5-triazin, Tris[2-(acryloyloxy)ethyl]isocyanurat und/oder Tris[2-(methacryloyloxy) ethyl]isocyanurat und/oder ein dendritisches (Meth)acrylat umfasst oder aus zumindest einer dieser Verbindungen besteht.

10. Harzzusammensetzung nach einem der Ansprüche 1 bis 9, **dadurch gekennzeichnet, dass** die Harzzusammensetzung eine Harzviskosität bei 20 °C von ≥5 Pa.s, bevorzugt von ≥20 Pa.s und insbesondere bevorzugt von ≥50 Pa.s aufweist.

11. Harzzusammensetzung nach einem der Ansprüche 1 bis 10, **dadurch gekennzeichnet, dass** elektrisch leitfähige Additive, bevorzugt Carbon Nanotubes, bevorzugt in Mengen von 0,001 Gew.-% bis 10 Gew.-% bezogen auf das gesamte Gewicht der Harzzusammensetzung zugesetzt sind.

12. Harzzusammensetzung nach einem der Ansprüche 1 bis 11, **dadurch gekennzeichnet, dass** Glasfasern und/oder Glaskugeln und/oder Wollastonit, bevorzugt in Mengen von 0,1 Gew.-% bis 40 Gew.-% bezogen auf das gesamte Gewicht der Harzzusammensetzung zugesetzt sind.

13. Harzzusammensetzung nach einem der Ansprüche 1 bis 12, **dadurch gekennzeichnet, dass** Zähigkeitsmodifikatoren, bevorzugt Core-Shell-Polymere oder TPU Partikel, bevorzugt in Mengen von 0,5 Gew.-% bis 30 Gew.-%, weiter bevorzugt in Mengen von 2 Gew.-% bis 15 Gew.-% und besonders bevorzugt in Mengen von 5 Gew.-% bis 10 Gew.-% bezogen auf das gesamte Gewicht der Harzzusammensetzung zugesetzt sind.

14. Harzzusammensetzung nach einem der Ansprüche 1 bis 13, **dadurch gekennzeichnet, dass** mindestens ein Oligomer oder Polymer ausgewählt aus der Gruppe bestehend aus Polyimiden, Polyphenylenethern, Polyphenylensulfiden, Polyethersulfonen und Flüssigkristallpolymeren zugesetzt ist, bevorzugt mit polymerisierbaren End- und/oder Seitengruppen und bevorzugt in Mengen von 2 Gew.-% bis 30 Gew.-% bezogen auf das gesamte Gewicht der Harzzusammensetzung.

15. Polymer hergestellt durch Vernetzung einer Harzzusammensetzung nach einem der Ansprüche 1 bis 14.

16. Polymer nach Anspruch 15, **dadurch gekennzeichnet, dass** das Polymer eine Zugfestigkeit gemäß ISO 527-2 von ≥20 MPa, bevorzugt von ≥25 MPa und besonders bevorzugt von ≥30 MPa, weiters besonders bevorzugt von ≥40 MPa bis bevorzugt ≥80 MPa, bevorzugt ≥50 MPa bis ≥70 MPa und besonders bevorzugt von ≥60 MPa aufweist.

17. Polymer nach Anspruch 15 oder 16, **dadurch gekennzeichnet, dass** das Polymer einen Zugmodul nach ISO 527-2 von ≥1 GPa, bevorzugt von ≥1,5 GPa und besonders bevorzugt von ≥2 GPa besitzt.

18. Polymer nach einem der Ansprüche 15 bis 17, **dadurch gekennzeichnet, dass** das Polymer eine Wärmeformbeständigkeit HDT-A gemäß ISO 75 von ≥100 °C, bevorzugt von ≥150 °C, weiter bevorzugt von ≥175 °C und besonders bevorzugt von ≥200 °C aufweist.

19. Polymer nach einem der Ansprüche 15 bis 18, **dadurch gekennzeichnet, dass** das Polymer einen RTI gemäß UL 746B von ≥125 °C, bevorzugt von ≥150 °C, weiter bevorzugt von ≥175 °C und insbesondere bevorzugt von ≥200 °C aufweist.

20. Polymer nach einem der Ansprüche 15 bis 19, **dadurch gekennzeichnet, dass** das Polymer Durchschlagsfestigkeiten gemäß IEC 60243-1 von ≥20 kV/mm, bevorzugt von ≥25 kV/mm und insbesondere bevorzugt von ≥30 kV/mm aufweist.

21. Polymer nach einem der Ansprüche 15 bis 20, **dadurch gekennzeichnet, dass** das Polymer einen CTI-Wert gemäß IEC 60112 von ≥200 V, bevorzugt von ≥400 V und insbesondere bevorzugt von ≥600 V aufweist.

22. Verfahren zur Herstellung eines dreidimensionalen Formkörpers umfassend:
- Bereitstellen einer Harzzusammensetzung nach einem der Ansprüche 1 bis 14,
- Durchführen eines lichtinduzierten Strukturierungsschritts zur Herstellung eines Grünkörpers.

23. Verfahren nach Anspruch 22, **dadurch gekennzeichnet, dass** der lichtinduzierte Strukturierungsschritt in einem Temperaturfenster von 30-120 °C, bevorzugt zwischen 50-100 °C und weiter bevorzugt zwischen 65-90 °C erfolgt.

24. Verfahren nach Anspruch 22 oder 23, **dadurch gekennzeichnet, dass** der Grünkörper mindestens einem Postprocessing-Schritt ausgewählt aus Zentrifugieren, Reinigen mit einem Lösungsmittel für unstrukturierte Harzzusammensetzung, Nachhärten, insbesondere strahlungsinduziertes und/oder thermisches Nachhärten, Einbringen mindestens eines Metallteils, Halbmetallteils, Keramikteils und/oder Microchips, Beschichten oder Abscheiden von Metallschichten, Keramikschichten, Kunststoffschichten und/oder organischen und/oder anorganischen Schichten und Löten unterzogen wird.

25. Verfahren nach Anspruch 22, 23 oder 24 zur Herstellung eines elektronischen Isolierkörpers, elektronischen Steckers oder Steckverbinders.
